(19) Europäisches Patentamt
European Patent Office
Office européen des brevets

(11) EP 4 256 393 B1

(12) # EUROPEAN PATENT SPECIFICATION

(45) Date of publication and mention of the grant of the patent:
**08.04.2026 Bulletin 2026/15**

(21) Application number: **21835060.1**

(22) Date of filing: **02.12.2021**

(51) International Patent Classification (IPC):
***G02B 27/01*** *(2006.01)*

(52) Cooperative Patent Classification (CPC):
**G02B 27/0101; G02B 5/223; G02B 5/282; G02B 5/285;** G02B 2027/012

(86) International application number:
**PCT/US2021/061519**

(87) International publication number:
**WO 2022/119996 (09.06.2022 Gazette 2022/23)**

(54) **SECONDARY IMAGE MITIGATION AND SOLAR CONTROL IN HUD SYSTEMS**

SEKUNDÄRBILDMINDERUNG UND SOLARSTEUERUNG IN HUD-SYSTEMEN

ATTÉNUATION D'IMAGE SECONDAIRE ET CONTRÔLE SOLAIRE DANS DES SYSTÈMES D'AFFICHAGE TÊTE HAUTE (HUD)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.12.2020 US 202063121325 P**

(43) Date of publication of application:
**11.10.2023 Bulletin 2023/41**

(73) Proprietor: **Solutia Inc.**
**St. Louis, Missouri 63141 (US)**

(72) Inventors:
- **LI, Jaime Antonio**
  **Martinsville, VA 24112 (US)**
- **ELKINS, Casey Lynn**
  **Kingsport, TN 37664 (US)**
- **HALDEMAN, Steven V.**
  **Hampden, MA 01036 (US)**
- **KORAN, Francois Andre**
  **Longmeadow, MA 01106 (US)**

(74) Representative: **Ricker, Mathias**
**Wallinger Ricker Schlotter Tostmann**
**Patent- und Rechtsanwälte Partnerschaft mbB**
**Zweibrückenstraße 5-7**
**80331 München (DE)**

(56) References cited:
**EP-A1- 3 667 396**
**WO-A1-2020/068513**
**GB-A- 2 579 370**
**US-A- 5 005 009**
**US-A1- 2012 019 923**
**US-A1- 2022 050 287**
**US-B1- 7 656 585**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 256 393 B1

## Description

### FIELD OF THE INVENTION

The present invention is generally directed to head-up-display systems.

### BACKGROUND OF THE INVENTION

In its most common form, a head-up-display (HUD) automotive system may comprise a computerized signal generator, a projector, and a laminated glass windscreen system that acts as a reflection screen for the projected image. The images generated by the computerized signal generator are fed to the projector, which generates light patterns, expands and collimates the light images through a series of mirrors, and projects the images towards the windscreen at a specially selected angle designed to maximize reflection intensity.

As the projected image hits the inner surface of the windshield, that is, the air-glass interface, it encounters a significant change in refractive index that causes part of the image intensity (light) to be reflected off the surface, in the direction of the driver eyebox. This image, termed the primary image, travels to the driver's pupils in the form of visual information. The part of the image that is not reflected at the inner glass surface continues through the PVB and glass, with only small changes to refraction angle resulting from minor variations in refractive indices between the glass and polymer interlayer(s). Once the transmitted light reaches the outer glass surface, it encounters a large refractive index change at the air interface and a portion of the light is reflected back in. This reflected image travels back through the laminate and a significant portion emerges from the laminate traveling to a point above the driver's eyebox (thus unseen).

There exists, however, a second series of light rays emerging at a slightly different angle from the projector that travels a similar path into and back out of the laminate that is reflected at an angle such that the reflection off the outer glass surface also hits the driver eyebox. This is often referred to as the secondary image. When the front and rear glass lites in a laminate are essentially parallel to each other, the primary and secondary images are slightly offset, such that the secondary image appears to be a lower intensity 'ghost' image of the primary image.

In most commercial applications, OEMs make use of wedged PVB interlayers that create an angle between the inner and outer glass lite, in order to bring the secondary image into alignment with the first. This technique is quite effective, but has inherent drawbacks around cost, lamination complexity, and size limitations of the driver eyebox. The automotive industry has thus been actively working on developing ways to create crisp, ghost-free HUD images without the need for wedged interlayers, or to be used in combination with wedged interlayers.

U.S. Pat. No. 7,777,960 discloses a projection system, such as a system suitable for head-up displays in automobiles, that includes a laser projection source and a scanner. Light from the laser projection source is scanned across a projection surface, which can be a car's windshield. The projection surface includes a buried numerical aperture expander capable of reflecting some light and transmitting other light. The system may also include an image projection source capable of presenting high-resolution images on a sub-region of the projection surface that has an optical relay disposed therein.

EP2045647A1 discloses a multi-colored head-up-display for use in motor vehicles for combining driver information with the scene in front of the vehicle. The display has a projection unit with a combiner unit, that exhibits anti-reflection coating at a side turned away from the viewer. An image sensor is provided that has a light source that emits light in three color bands. The combiner unit exhibits a triple-notch-filter at a side turned toward a viewer.

U.S. Pat. Appln. Publn. No. 2018/0031749 discloses a metamaterial optical filter including: a transparent substrate; and a photosensitive polymer layer provided to the transparent substrate, wherein the photosensitive polymer layer is treated using a laser to form a non-conformal holographically patterned subwavelength grating, the holographic grating configured to block a predetermined wavelength of electromagnetic radiation.

U.S. Pat. Appln. Publn. No. 2018/0186125 discloses a laminate that utilizes the ability of a narrow band absorbing dyes to absorb selective wavelengths of light by identifying a color target and tuning to that target. Working with just glass compositions, coatings, interlayers and films, all of which act as broad band filters, it is said to be difficult to fine tune the spectral response of a laminate. Narrow band absorbing dyes are used to selectively tune the spectral response to achieve targeted performance in the UV, visible and IR ranges of the spectrum.

Document US 5 005 009 A discloses an instrument display apparatus. Document WO 2020/068513 A1 discloses a glass laminate. Document US 7 656 585 B1 discloses an optical relay. Document EP 3 667 396 A1 discloses a display device. Document GB 2 579 370 A discloses a display device. U.S. Pat. Appln. Publn. No. 2012/019923 A1 discloses an optical device.

A continuing need exists for improved head-up-displays with strong primary images that avoid secondary images and ghosting, and that block solar rays that can contribute to heat build-up in automobiles.

## SUMMARY OF THE INVENTION

In one aspect, the present invention relates to display systems for displaying information. According to this aspect, the display system includes: a glazing that includes a first transparent rigid substrate, a second transparent rigid substrate, and an interlayer positioned between the first and the second transparent rigid substrates; a projector that emits light toward the glazing at three discrete wavelength ranges in the visible spectrum; one or more narrow-band absorbers, disposed in a vision area of the glazing, that selectively absorb light within at least one of the three discrete wavelength ranges; and one or more narrow-band reflectors, disposed in the vision area of the glazing, that selectively reflect light within at least one of the three discrete wavelength ranges, wherein at least one of the narrow-band reflectors exhibits both a narrow secondary reflection in the visible range that selectively reflects the light within at least one of the three wavelength ranges emitted by the projector, and a primary reflection in the near-infrared range, in the same multilayer construction.

Further aspects of the invention are as disclosed and claimed herein.

## BRIEF DESCRIPTION OF THE DRAWINGS

Figure 1 is a representative spectrum of a NIR reflector that has a secondary narrow blue reflection peak.
Figure 2 is a representative spectrum of a NIR reflector that has a secondary narrow band green reflection peak.
Figure 3 is a spectrum depicting the absorption and reflection of the narrow-band rejectors of the invention.
Figure 4 is a schematic of a dielectric multilayer reflector stack of the invention.
Figure 5 is a schematic of a display system according to Example 1.
Figure 6 depicts the glazing of Example 3.

## DETAILED DESCRIPTION

The invention is defined in the appended claims. In one aspect, the present invention is thus directed to a display system for displaying information, that is provided with a glazing that includes a first transparent rigid substrate, a second transparent rigid substrate, and an interlayer positioned between the first and the second transparent rigid substrates. The systems further comprise a projector that emits light toward the glazing at three discrete wavelength ranges in the visible spectrum, and at least one narrow band absorber, or at least two narrow band absorbers, disposed in a vision area of the glazing, that selectively absorb light within the wavelength ranges emitted by the projector. The systems further comprises one or more narrow-band reflectors, disposed in the vision area of the glazing, that selectively reflect light within at least one of the three discrete wavelength ranges, wherein at least one of the narrow-band reflectors exhibits both a narrow secondary reflection in the visible range that selectively reflects the light within at least one of the three wavelength ranges emitted by the projector, and a primary reflection in the near-infrared range, in the same multilayer construction. Together, these narrow-band absorbers and narrow-band reflectors may be referred to collectively as narrow-band rejectors.

In a further aspect, the present invention comprises a PVB interlayer that includes a PVB resin, and at least three narrow-band rejectors that selectively reject light within three discrete wavelength ranges.

Thus, in one embodiment, the invention relates to display systems for displaying information, that comprise a glazing that includes a first transparent rigid substrate, a second transparent rigid substrate, and an interlayer positioned between the first and the second transparent rigid substrates. The display systems further comprise a projector that emits light toward the glazing at three discrete wavelength ranges in the visible spectrum. According to this embodiment, the display systems further comprise one or more narrow-band absorbers, disposed in a vision area of the glazing, that selectively absorb light within at least one of the three discrete wavelength ranges; and one or more narrow-band reflectors, disposed in the vision area of the glazing, that selectively reflect light within at least one of the three discrete wavelength ranges, wherein at least one of the narrow-band reflectors exhibits both a narrow secondary reflection in the visible range that selectively reflects the light within at least one of the three wavelength ranges emitted by the projector, and a primary reflection in the near-infrared range, in the same multilayer construction.

In a second embodiment, according to the first embodiment, the one or more narrow-band reflectors comprises a dielectric multilayer stack.

In a third embodiment, according to any of the preceding embodiments, the dielectric multilayer stack comprises alternating high and low index materials that produce a primary peak in the NIR range and a secondary narrow peak in the visible range.

In a fourth embodiment, according to any of the preceding embodiments, the alternating high and low index materials are polymers.

In a fifth embodiment, according to any of the preceding embodiments, the alternating high and low index

materials are metal oxides.

In a sixth embodiment, according to any of the preceding embodiments, the one or more narrow-band reflectors reflects in the blue range of visible light.

In a seventh embodiment, according to any of the preceding embodiments, the one or more narrow-band reflectors reflects in the green range of visible light.

In an eighth embodiment, according to any of the preceding embodiments, the one or more narrow-band reflectors comprises two reflectors that reflect in the blue range of visible light and in the green range of visible light, respectively.

In a ninth embodiment, according to any of the preceding embodiments, the one or more narrow-band reflectors is provided in the interlayer.

In a tenth embodiment, according to any of the preceding embodiments, one or more narrow-band reflectors is in or on one of the rigid substrates.

In an eleventh embodiment, according to any of the preceding embodiments, the one or more narrow-band reflectors are in a coating or film attached to one of the two rigid substrates.

In a twelfth embodiment, according to any of the preceding embodiments, the one or more narrow band absorbers are in the interlayer.

In a thirteenth embodiment, according to any of the preceding embodiments, the one or more narrow band absorbers are in or on one of the rigid substrates.

In a fourteenth embodiment, according to any of the preceding embodiments, the one or more narrow band absorbers are in a coating or film attached to one of the two rigid substrates.

In a fifteenth embodiment, according to any of the preceding embodiments, the interlayer is provided with a wedge portion which aligns primary and secondary images reflected from the glazing.

In a sixteenth embodiment, according to any of the preceding embodiments, the three discrete wavelength ranges emitted by the projector include light of 445nm, 515nm, and 642nm.

In a seventeenth embodiment, according to any of the preceding embodiments, the three discrete wavelength ranges emitted by the projector include light of 445nm, 550nm, and 642nm.

In an eighteenth embodiment, according to any of the preceding embodiments, one of the discrete wavelength ranges emitted by the projector includes light having a wavelength selected from one or more of 635, 638, 650, or 660.

In a nineteenth embodiment, according to any of the preceding embodiments, the projector is a DPSS laser-based projector, and the three discrete wavelength ranges emitted by the projector include light of 457nm, 532nm, and 671nm, and have a FWHM from about 0.5nm to about 50nm.

In a twentieth embodiment, according to any of the preceding embodiments, the projector is a DPSS laser-based projector, and the three discrete wavelength ranges include light of 473nm, 532nm, and 671nm, and have a FWHM from about 0.5nm to about 50nm.

In a twenty-first embodiment, according to any of the preceding embodiments, the narrow-band absorbers are selected from dyes and pigments.

In a twenty-second embodiment, according to any of the preceding embodiments, at least one of the narrow-band absorbers is a polymethine dye.

In a twenty-third embodiment, according to any of the preceding embodiments, the interlayer comprises PVB.

In a twenty-fourth embodiment, according to any of the preceding embodiments, the narrow band absorbers are in a film positioned between two PVB layers in the interlayer.

In a twenty-fifth embodiment, according to any of the preceding embodiments, the glazing incorporates one or more UV light blockers.

In a twenty-sixth embodiment, according to any of the preceding embodiments, the UV blockers are UV dye absorbers forming a layer blocking UV radiation to the narrow band dyes.

In a twenty-seventh embodiment, according to any of the preceding embodiments, the glazing system incorporates NIR absorbers. In a further embodiment at least one of the narrow-band reflectors exhibits both a narrow secondary reflection in the visible range that selectively reflects the light within at least one of the three wavelength ranges emitted by the projector, and a primary reflection in the near-infrared range.

Thus, according to the invention, a display system such as a HUD projection system is provided, that comprises a projector and a glazing provided with a light-absorbing substrate, for example a glazing laminated with an interlayer that contains one or more narrow-band absorbers and narrow-band reflectors designed to selectively absorb the wavelengths in the visible spectrum that are emitted by the projector. In one aspect, the windscreen may be laminated with a non-wedge interlayer while blocking or reducing secondary images. In another aspect, the windscreen may be laminated with a wedge interlayer to assist the wedge in blocking or reducing the secondary images observed by the viewer. According to the invention, one or more compounds, described herein as "narrow-band absorbers," for example narrow-band absorbing dyes present in the substrate, absorb and thus minimize light from the projector being transmitted to the outer glass interface, and also absorb any remaining returning secondary reflections. Further, the invention provides at least one

narrow-band reflector that has a primary reflection in the near-infrared range, and a narrow secondary reflection in the visible range that selectively reflects light within at least one of the three wavelength ranges emitted by the projector, in the same multilayer construction. Another embodiment relates to a narrow-band reflector having a primary reflection in the visible range that selectively reflects light within at least one of the three wavelength ranges emitted by the projector.

An optional wedge PVB interlayer works in a head up display to align the primary and secondary images, but it isn't always perfect, which can result in small amounts of ghosting, which may or may not be considered acceptable. In the aspect of the invention in which we combine the use of narrow-band absorbers with a wedge interlayer, and at least one narrow-band reflector, we can reduce the contrast ratio of the secondary image such that, even with a small ghost image separation, the secondary image may not be noticeable. Such an approach might allow for a lower concentration of absorbers since with small image separations we may not need 75:1 contrast ratios, but perhaps 50:1 or 20:1 would suffice.

Desirable properties for automotive windshields thus include HUD compatibility, solar control, blue-light blocking for anti-glare and eye health, and signal-friendliness with regard to radio frequencies. According to the invention, a system is provided that is compatible with HUD, has solar control properties, and may reject harmful blue light that also causes glare from incoming traffic.

In one aspect as used herein, a "display system," or a "head-up-display system," comprises a projector or light emitter and a display, typically a "glazing" or laminated glass windscreen system that acts as a reflection screen for the projected image, thus from the viewer's perspective displaying information on the glazing. Images generated, for example, by a computerized signal generator are fed to the projector, which generates light patterns, typically expanding and collimating the light images through a series of mirrors and projecting the images toward the windscreen at a specially selected angle designed to maximize reflection intensity.

As used herein, the "glazing" includes a first transparent rigid substrate, and a second transparent rigid substrate, and an interlayer positioned between the first substrate and the second substrate. The rigid transparent substrates are typically glass, although polymers such as polycarbonate, acrylic, polyester, copolyester, or the like may alternatively be used. The interlayer may be a single layer of a polymer, such as PVB, or may be a compound interlayer comprising multiple layers of polymers or other elements necessary for the intended effect, as further described herein. For example, the narrow band absorbers and/or narrow-band reflectors may be provided in a film that is positioned between two PVB layers in the interlayer.

In the aspect in which an interlayer is present in the glazing and the rigid substrates are glass, we can consider the glazing to have four surfaces or interfaces. The first interface, commonly referred to as "Surface 1", is the interface between the air outside the vehicle and the outer surface of the outer glass lite. This is the interface at which the secondary, or ghost, image is reflected to the viewer. The second interface is at the inner surface of the outer glass lite and the interlayer. The third interface is that between the interlayer and the outer surface of the inner glass lite, and the fourth interface, commonly referred to as "Surface 4" is that between the interior surface of the inner glass lite and the air.

According to the invention, the secondary image to be eliminated or masked is caused by light from the projector that is not reflected at the inner interface, Surface 4, to create the primary image. This light instead travels through the interlayer and the outer glass lite and is reflected at the Surface 1 interface back through the interlayer and toward the viewer. Thus, when the narrow band absorbers and narrow band reflectors are in the interlayer that serves as the light-absorbing substrate, the narrow-band absorbers and reflectors serve to reject this stray light as it travels toward the outer interface, as well as when it is reflected from Surface 4 and travels back through the interlayer toward the viewer.

When we say "the same wavelengths," we do not imply mathematical precision. That is, the term "same wavelengths" would include "the same or similar wavelengths." Naturally, it is desired that the narrow-band absorbers absorb precisely the same wavelengths as emitted by the projector, and that the narrow-band reflectors reflect precisely those wavelengths, but in practice, slightly mismatched absorptions or reflections are satisfactory, so long as the wavelengths of interest are eliminated or reduced satisfactorily.

As used herein, "primary image" thus refers to the part of a projected image that is reflected off a display surface in the direction of the driver, sometimes referred to as the "driver eyebox." This primary image is an intended image which is reflected from the interior air-glass interface and travels to the driver's pupils in the form of visual information. According to the invention, the reflection may be a result of the light or image encountering a significant change in refractive index at an interface that causes part of the image intensity (light) to be reflected. Typically, this would be the interior air-glass interface.

As used herein, "secondary image" is distinct from the "primary image" and is an unwanted image. Instead of reflecting from an intended display surface toward a viewer, the secondary image arises from unwanted reflections such as those created by the refractive index difference between the outside of the second transparent rigid substrate of the glazing and the exterior air.

As used herein, the glazing will have a "vision area," which can be any area of the glazing that can be viewed. In one aspect, the vision area will be the area where an image is displayed. In another aspect, the vision area will be any area that can be seen, or that can be seen through.

According to the present invention, the secondary image is suppressed with a combination of narrow band

rejections within similar ranges of the primary color sources from the projector. The narrow band rejections are based on narrow band absorbers and narrow band reflectors; with the added advantage, in some embodiments, of the reflector providing solar energy rejection in the near-infrared (NIR) range. While narrow band absorbers are effective alone, they do not provide rejection of solar energy in the NIR range as do the narrow-band reflectors of some embodiments of the present invention.

In one aspect, the narrow band absorbers may be provided in a light-absorbing substrate, for example in the interlayer. In another aspect, the narrow band absorbers are located disposed elsewhere within the vision area of the glazing, for example in a film attached to one of the rigid substrates, or in the rigid substrates themselves.

When we say that the narrow band absorbers of the invention absorb in the visible spectrum, we mean that they absorb at wavelengths from about 380 nm to about 740 nm. When we say that the projector emits light toward the glazing at three discrete wavelength ranges, the ranges referred to may be defined by their FWHM, or full-width half-maximum values, as further defined herein. Thus, when we say that the narrow band absorbers selectively absorb light within these ranges, we mean that they absorb light within these ranges, while not absorbing light outside these ranges to the extent that the Tvis values are not substantially affected. Alternatively, the ranges may be defined by absolute values, for example from 430 to 490 nm, from 500 to 565 nm, and from 625 to 740 nm, or from 430 to 475 nm, from 510 to 550 nm, and from 640 to 700 nm.

In one aspect, the narrow-band reflectors according to the invention have a primary reflection in the near-infrared range, and a narrow secondary reflection in the visible range that selectively reflects light within at least one of the three wavelength ranges emitted by the projector, in the same multilayer construction. This can be seen in Figure 1, which depicts a representative spectrum of a near-infrared reflector that has a secondary narrow blue reflection peak. Similarly, Figure 2 depicts a representative spectrum of a near-infrared reflector that has a secondary narrow band green reflection peak. These near-infrared reflectors are combined with one or more narrow-band absorbers to reduce or eliminate unwanted ghosting. Thus, figure 3 shows an example of the general placement on the electromagnetic spectrum, of the visible reflection, visible absorption, and NIR reflection peaks. The narrow band reflector in the visible range may also be combined with narrow absorbers at the same range if so desired, the combination will allow for more efficient secondary ghost image suppression or overall color balance. Note that the projector's source intensity may need to be adjusted to provide a balanced color for the primary image.

In another aspect, the narrow-band reflector may have a primary reflection in the visible range that selectively reflects light within at least one of the three wavelength ranges emitted by the projector. In this aspect, there may not be significant reflection of near-infrared wavelengths.

When we say "near-infrared" we do not intend this term to be particularly limiting. For purposes of the present invention, the near-infrared range may be considered to be, for example, from about 780nm to about 2500 nm. Those skilled in the art will understand that near-infrared reflection will reduce the amount of heat inside the vehicle, and thus the broader the range of near-infrared reflection, the more resistant the vehicle will be to heat build-up. Thus, in various aspects of the near-infrared reflector, when measured at 45 degrees angle of incidence, the range of the reflected wavelengths will be from about 1000 to about 1700nm, or from 1220 to 2046nm, or from 1098 to 1480nm, or from 1318 to 1797nm. Thus, in aspects, the wavelength range of near-infrared waves reflected at half intensity from the maximum, referring to FWHM will be from about 1064 to about 1522 nm wide, or from 1297 to 1857, or from 1138 to 1403, or from 1375 to 1701 measured at 45 degrees angle of incidence as explained below.

The one or more narrow-band reflectors according to the invention (typically blue or green), in one aspect, may be made from a dielectric multilayer reflector of alternating high and low index materials. According to the invention, a wide NIR reflector is designed to have an additional narrow band reflector in the visible range in the same construction. The narrow band rejection in the visible range is aligned with one or two of the primary emissions from the projector. Since the primary color component from the projector is selectively reflected, there would be no significant intensity beyond the reflector to produce a ghost image from the primary color component.

Thus, in one aspect, the narrow-band reflectors may be constructed by alternating layers of high index and low index materials. For example, at an incident angle of 45 degrees; alternating 7 layers of 158nm NbOx and 230nm of $SiO_2$, starting with the high index, is expected to have a spectrum with a NIR peak centered at 1249nm with a FWHM of approximately 460nm and a narrow peak in the visible centered at 443nm with a FWHM of approximately 47nm. Alternatively, alternating 11 layers of 156nm NbOx and 193nm of AlOx, starting with the high index would have a spectrum with a NIR peak centered at 1258nm with a FWHM of approximately 265nm and a narrow peak in the visible centered at 443nm with a FWHM of approximately 30nm.

In other aspects, the high index material may comprise one or more of niobium oxide NbOx, aluminum oxides AlOx, titanium oxide TiOx, indium oxide, tantalum oxide.TiOx, zinc sulfide ZnS, or other material where the index of refraction at a given wavelength of interest is higher than the low index material that is combined with.

In another aspect, the low index material may comprise one or more of silicon oxide SiOx, aluminum oxide AlOx, magnesium fluoride $MgF_2$, cryolite $Na_3AlF_6$, or other material where the index of refraction at a given wavelength of interest is lower than the high index material that it is combined with.

Those skilled in the art will understand that other metal oxides, or compounds may likewise be used to form these stacks, and the precise stoichiometry of all of these oxides is not critical.

The deposition techniques used to form these stacks is not particularly limited, and may include sputtering, evaporation, chemical vapor deposition, and plasma assisted variations of said deposition methods.

Alternatively, the narrow-band reflector may be a polymer film comprising alternating layers of a high index and a low index polymer that functions to reflect near-infrared radiation without creating interference with radio-frequencies, as described, for example, in U.S. Patent No. 6,797,396.

The narrow-band reflectors according to the invention may thus comprise selective NIR reflectors made of dielectric multilayers that reflect a band of solar energy in the NIR range. We note that, although reflection bands in the visible range are normally undesirable, according to the invention, the reflector is conveniently designed to produce an additional peak in the visible that is narrow, which is used in combination with narrow band absorbers to suppress the ghost image from the three primary components of the projector. This combination has the added bonus of providing solar energy reflection in the NIR range.

When we refer to light-absorbing substrates of the invention, we mean substrates that incorporate narrow-band absorbers and/or narrow-band reflectors that are selected to absorb light of the same or similar wavelengths in the visible spectrum as those emitted by a projector or emitter. Typical HUD projectors emit light at three narrow wavelengths representing the three primary colors of red, green, and blue, using the RGB additive color model. These typically correspond, for example, to approximately 580-700nm (red), 480nm to 580(green), and 400-480nm (blue). In a more specific embodiment, the wavelength ranges in the RGB model may be considered to be 600-700nm (red), 500-560nm (green), and 400-490nm (blue). Alternatively, we may consider these ranges to be 635-700nm (red), 520-560nm (green), and 400-450nm (blue), or as described elsewhere herein. The three-color combination enables the production of a nearly infinite set of projected colors in the final image. The narrow breadth of each color or wavelength range is designed to minimize effects to the bulk of the light passing through the windshield. The light-absorbing substrate according to the invention is provided with similarly-matched narrow wavelength absorbers and reflectors in order to maintain the desired HUD windshield properties.

As used herein, the terms "projector," "emitter," and "light emitter" are used to describe elements that emit or project light, and especially multiple selected wavelength ranges.

In one aspect, the projector may be an LED projector. LED projectors typically use 2 or 3 individual LEDs to produce a more narrow spectrum of light that can be combined to form white light or any color combination. 2-LED systems produce green by shifting the blue LED, resulting in a broad green emission. 3-LED systems use separate RGB LEDs. However, some LED peak widths (typically 15-30nm) may be more challenging for the invention to be used in windscreens and still achieve a value of 70% $T_{vis}$. A laser projector may therefore be preferred in certain applications.

In another aspect, the projector is thus a laser projector. Laser projectors use lasers to create RGB image components that can be combined to produce white light or any color combination. Lasers have extremely narrow emission spectra (typically ~2nm), making them especially suitable for use according to the invention.

In one aspect, then, the projector may be a laser diode-based projector, for example, that is capable of emitting center wavelengths of 445nm (blue), 515 or 520 (green), and 642nm, 635nm, 638 nm, 650nm, or 660nm (red).

In another aspect, the projector may be, for example a DPSS laser-based projector with center wavelengths of 457 or 473nm (blue), 532 (green), and 671nm (red). Laser projectors are generally considered to give better image quality and color reproduction compared to lamp and LED type projectors.

As used herein, the discrete wavelength ranges of light projected by the projector, and likewise the discrete wavelength ranges of light absorbed the narrow band absorbers, as well as the discrete wavelength ranges of light reflected by the narrow band reflectors, may have defined widths, reported herein as FWHM, or full-width half-maximum values, that is, the wavelength range at which half of the maximum intensity of the light projected, absorbed, or reflected is achieved, as calculated by $\lambda 2 - \lambda 1$, where $\lambda 1$ and $\lambda 2$ are the wavelengths nearest the respective peak wavelength where the measured light intensity is half of the peak intensity, and $\lambda 2 > \lambda 1$.

Thus according to the invention, these discrete wavelength ranges may have a width (FWHM) of at least 0.5 nm, or at least 1 nm, or at least 2nm, or at least 5nm, and up to about 5nm, or up to about 7nm, or about 10nm, or about 15nm, or about 20nm, or about 25nm, or about 30nm, or about 50nm, or up to 100nm.

According to the invention, the narrow band absorbers and narrow-band reflectors are disposed in a vision area of the glazing, and selectively absorb or reflect light within the wavelength ranges emitted by the projector. This vision area may be any area of the glazing that may be viewed. The narrow band absorbers and narrow band reflectors may thus be provided in the interlayer to comprise a light absorbing substrate or may be in or on one of the rigid substrates to comprise a light-absorbing substrate.

The light-absorbing substrate may thus be any substrate in which or on which the narrow-band absorbers and narrow-band reflectors may be placed. The light-absorbing substrate can be a monolayer, or multilayer, and can incorporate multiple other functionalities such as a PVB interlayer function, as known to those skilled in the art.

For example, in one aspect the light-absorbing substrate is a PVB interlayer in which the narrow band absorbers

and/or narrow-band reflectors are incorporated. In another aspect, the light absorbing substrate is a polymer substrate incorporating the narrow-band absorbers and/or narrow band reflector that is positioned between two PVB interlayers, for example a polyester. In another aspect, the light absorbing substrate is disposed on a PVB interlayer, for example by coating a light-absorbing substrate comprising the narrow band absorbers onto the PVB. In yet another aspect, the light absorbing substrate comprising the narrow band absorbers and/or narrow-band reflectors is disposed on at least one of the two rigid substrates, for example by coating a layer of light-absorbing substrate that incorporates the narrow-band absorbers onto one of the two rigid substrates. So long as the light-absorbing substrate comprising the narrow band absorbers and/or narrow-band reflector is positioned so as to absorb stray light from the projector that would otherwise reach the outer glass-air interface and constitute a secondary image, the secondary image will thus be reduced or eliminated.

Additional NIR reflectors or NIR reflectors with a wider width may be provided to make the reflector reflect more solar energy in the NIR range, thus improving solar performance.

To further improve solar rejection properties, a selective NIR absorber, such as CWO or ATO, and UV blocking absorbers may be added to the construction. The selective NIR absorbers would absorb solar energy that is not reflected, and the UV absorber would absorb UV solar energy and prevent UV degradation of the materials and the interior of the vehicle

In certain embodiments, the interlayer used to form a windshield as described herein may be a single layer, or monolithic, interlayer. In certain embodiments, the interlayer may be a multiple layer interlayer comprising at least a first polymer layer and a second polymer layer. When the interlayer is a multiple layer interlayer, it may also include a third polymer layer such that the second polymer layer is adjacent to and in contact with each of the first and third polymer layers, thereby sandwiching the second polymer layer between the first and third polymer layers. As used herein, the terms "first," "second," "third," and the like are used to describe various elements, but such elements should not be unnecessarily limited by these terms. These terms are only used to distinguish one element from another and do not necessarily imply a specific order or even a specific element. For example, an element may be regarded as a "first" element in the description and a "second" element in the claims without being inconsistent. Consistency is maintained within the description and for each independent claim, but such nomenclature is not necessarily intended to be consistent therebetween. Such three-layer interlayers may be described as having at least one inner "core" layer sandwiched between two outer "skin" layers. In certain embodiments, the interlayer may include more than three, more than four, or more than five polymer layers. As used herein, the terms "core", "skin", "first", "second", "third", and the like do not impart any limitations on the thicknesses or relative thicknesses of each layer.

Each polymer layer of the interlayer may include one or more polymeric resins, optionally combined with one or more plasticizers, which have been formed into a sheet by any suitable method. One or more of the polymer layers in an interlayer may further include additional additives, although these are not required. The polymeric resin or resins utilized to form an interlayer as described herein may comprise one or more thermoplastic polymer resins. When the interlayer includes more than one layer, each layer may be formed of the same, or of a different, type of polymer.

Examples of polymers suitable for forming the interlayer can include, but are not limited to, poly(vinyl acetal) polymers, polyurethanes (PU), poly(ethylene-co-vinyl) acetates (EVA), poly(vinyl chlorides) (PVC), poly(vinylchloride-co-methacrylate), polyethylenes, polyolefins, ethylene acrylate ester copolymers, poly(ethylene-co-butyl acrylate), silicone elastomers, epoxy resins, and acid copolymers such as ethylene/carboxylic acid copolymers and ionomers thereof, derived from any of the previously-listed polymers, and combinations thereof. In some embodiments, the thermoplastic polymer can be selected from the group consisting of poly(vinyl acetal) resins, poly(vinyl chloride), poly(ethylene-co-vinyl) acetates, and polyurethanes, while in other embodiments, the polymer can comprise one or more poly(vinyl acetal) resins. Although generally described herein with respect to poly(vinyl acetal) resins, it should be understood that one or more of the above polymers could be included in addition to, or in the place of, the poly(vinyl acetal) resins described below in accordance with various embodiments of the present invention.

When the polymer used to form interlayer includes a poly(vinyl acetal) resin, the poly(vinyl acetal) resin may include residues of any aldehyde and, in some embodiments, may include residues of at least one $C_4$ to $C_8$ aldehyde. Examples of suitable $C_4$ to $C_8$ aldehydes can include, for example, n-butyraldehyde, i-butyraldehyde, 2-methylvaleraldehyde, n-hexyl aldehyde, 2-ethylhexyl aldehyde, n-octyl aldehyde, and combinations thereof. In certain embodiments, the poly(vinyl acetal) resin may be a poly(vinyl butyral) (PVB) resin that primarily comprises residues of n-butyraldehyde. Examples of suitable types of poly(vinyl acetal) resins are described in detail in U.S. Patent No. 9,975,315 B2.

In certain embodiments, the interlayer may include one or more polymer films in addition to one or more polymer layers present in the interlayer. As used herein, the term "polymer film" refers to a relatively thin and often rigid polymer that imparts some sort of functionality or performance enhancement to the interlayer. The term "polymer film" is different than a "polymer layer" or "polymer sheet" as described herein, in that polymer films do not themselves provide the necessary penetration resistance and glass retention properties to the multiple layer panel, but, rather, provide other performance improvements, such as near-infrared absorption or reflection character.

In certain embodiments, poly(ethylene terephthalate), or "PET," may be used to form a polymer film and, ideally,

the polymer films used in various embodiments are optically transparent. The polymer films suitable for use in certain embodiments may also be formed of other materials, including various metallic, metal oxide, or other non-metallic materials and may be coated or otherwise surface-treated. The polymer film may have a thickness of at least about 0.012, 0.015, 0.020, 0.025, 0.030, 0.035, 0.040, 0.045, or at least about 0.050 mm or more.

According to some embodiments, the polymer film may be a re-stretched thermoplastic film having specified properties, while, in other embodiments, the polymer film may include a plurality of nonmetallic layers that function to reflect near-infrared radiation without creating interference with radio-frequencies, as described, for example, in U.S. Patent No. 6,797,396, which is incorporated herein by reference to the extent not inconsistent with the present disclosure. In certain embodiments, the polymer film may be surface treated or coated with a functional performance layer in order to improve one or more properties of the film, including adhesion or near-infrared radiation rejection. Other examples of polymer films are described in detail in PCT Application Publication No. WO88/01230 and U.S. Patent Nos. 4,799,745, 4,017,661, and 4,786,783. Other types of functional polymer films can include, but are not limited to, IR reducing layers, holographic layers, photochromic layers, electrochromic layers, antilacerative layers, heat strips, antennas, solar radiation blocking layers, decorative layers, and combinations thereof.

Additionally, at least one polymer layer in the interlayers described herein may include one or more types of additives that can impart particular properties or features to the polymer layer or interlayer. Such additives can include, but are not limited to, dyes, pigments, stabilizers such as ultraviolet stabilizers, antioxidants, anti-blocking agents, flame retardants, IR absorbers or blockers such as indium tin oxide, antimony tin oxide, lanthanum hexaboride ($LaB_6$) and cesium tungsten oxide, processing aides, flow enhancing additives, lubricants, impact modifiers, nucleating agents, thermal stabilizers, UV absorbers, dispersants, surfactants, chelating agents, coupling agents, adhesives, primers, reinforcement additives, and fillers. Additionally, various adhesion control agents ("ACAs") can also be used in one or more polymer layers in order to control the adhesion of the layer or interlayer to a sheet of glass. Specific types and amounts of such additives may be selected based on the final properties or end use of a particular interlayer and may be employed to the extent that the additive or additives do not adversely affect the final properties of the interlayer or windshield utilizing the interlayer as configured for a particular application.

According to some embodiments, interlayers as described herein may be used to form windshields that exhibit desirable acoustic properties, as indicated by, for example, the reduction in the transmission of sound as it passes through (i.e., the sound transmission loss of) the laminated panel. In certain embodiments, windshields formed with interlayers as described herein may exhibit a sound transmission loss at the coincident frequency, measured according to ASTM E90 at 20°C, of at least about 34, at least about 34.5, at least about 35, at least about 35.5, at least about 36, at least about 36.5, or at least about 37 dB or more.

The overall average thickness of the interlayer can be at least about 10, at least about 15, at least about 20, at least about 25, at least about 30, or at least about 35 mils and/or not more than about 100, not more than about 90, not more than about 75, not more than about 60, not more than about 50, not more than about 45, not more than about 40, not more than about 35, not more than about 32 mils, although other thicknesses may be used as desired, depending on the particular use and properties of the windshield and interlayer. If the interlayer is not laminated between two substrates, its average thickness can be determined by directly measuring the thickness of the interlayer using a caliper, or other equivalent device. If the interlayer is laminated between two substrates, its thickness can be determined by subtracting the combined thickness of the substrates from the total thickness of the multiple layer panel.

Interlayers used to form windshields as described herein can be formed according to any suitable method. Exemplary methods can include, but are not limited to, solution casting, compression molding, injection molding, melt extrusion, melt blowing, and combinations thereof. Multilayer interlayers including two or more polymer layers may also be produced according to any suitable method such as, for example, co-extrusion, blown film, melt blowing, dip coating, solution coating, blade, paddle, air-knife, printing, powder coating, spray coating, lamination, and combinations thereof.

When the interlayer is formed by an extrusion or co-extrusion process, one or more thermoplastic resins, plasticizers, and, optionally, one or more additives as described previously, can be pre-mixed and fed into an extrusion device. The extrusion device can be configured to impart a particular profile shape to the thermoplastic composition in order to create an extruded sheet. The extruded sheet, which is at an elevated temperature and highly viscous throughout, can then be cooled to form a polymeric sheet. Once the sheet has been cooled and set, it may be cut and rolled for subsequent storage, transportation, and/or use as an interlayer.

Co-extrusion is a process by which multiple layers of polymer material are extruded simultaneously. Generally, this type of extrusion utilizes two or more extruders to melt and deliver a steady volume throughput of different thermoplastic melts of similar or different viscosities or other properties through a co-extrusion die into the desired final form. The thickness of the multiple polymer layers leaving the extrusion die in the co-extrusion process can generally be controlled by adjustment of the relative speeds of the melt through the extrusion die and by the sizes of the individual extruders processing each molten thermoplastic resin material.

Windshields and other types of multiple layer panels may be formed from the interlayers and glazing panels as described herein by any suitable method. The typical glass lamination process comprises the following steps: (1)

assembly of the two substrates and the interlayer; (2) heating the assembly via an IR radiant or convective device for a first, short period of time; (3) passing the assembly into a pressure nip roll for the first de-airing; (4) heating the assembly for a short period of time to about 60°C to about 120°C to give the assembly enough temporary adhesion to seal the edge of the interlayer; (5) passing the assembly into a second pressure nip roll to further seal the edge of the interlayer and allow further handling; and (6) autoclaving the assembly at temperature between 135°C and 150°C and pressures between 150 psig and 200 psig for about 30 to 90 minutes. Other methods for de-airing the interlayer-glass interface, as described according to one embodiment in steps (2) through (5) above include vacuum bag and vacuum ring processes, and both may also be used to form windshields and other multiple layer panels as described herein.

According to the invention, the display systems are provided with narrow-band reflectors, for example a dielectric multilayer reflector. Thus, according to the invention, a wide NIR reflector is provided, that is designed to have an additional narrow band reflection in the visible range, in the same multilayer construction. The narrow band rejection in the visible range is aligned with one or two of the primary emissions from the projector. Since the primary color component from the projector is selectively reflected, there would be no significant intensity to produce a ghost image from said primary color component. When the narrow-band reflector reflects blue wavelengths of visible light, as depicted in Figure 1, the remaining wavelengths, green and/or red, are absorbed by narrow-band absorbers to mitigate ghost images. The primary image is formed on or near the internal surface of the glass, and the transmitted light from the projector is then rejected by the absorber and reflector, preventing the unwanted secondary image from forming at the exterior glass/air interface of the windshield.

The materials and thicknesses for the dielectric multilayer reflectors are chosen to produce a wider reflection in the NIR region; this NIR reflection provides solar energy rejection. This is seen in the reflection spectra depicted in Figures 1 and 2. The constructions are also chosen to produce additional secondary narrow band peaks in the visible region in the blue and/or green range; these peaks are used to reflect either the blue and/or green color from the projector. Since the blue or green source is reflected, their intensities are greatly reduced and would not be able to produce a significant secondary ghost image. The spectra of dielectric multilayers are known to shift with angle of incidence. The location and width of the reflection peak may thus be adjusted to the required angle to match the color component to be suppressed.

Turning now to Figure 4, a dielectric multilayer reflector is depicted that that has a primary reflection in the near-infrared range, and a narrow secondary reflection in the visible range that selectively reflects light within at least one of the three wavelength ranges emitted by the projector. The dielectric multilayer reflector is a dielectric stack deposited on a polymer substrate.

So long as the one or more narrow-band reflectors are positioned to reflect light that would otherwise cause ghosting from a secondary image, the position of the reflector(s) is not particularly limited. Turning now to Figure 5, a laser projector (100) is provided that emits light. The projector is oriented to emit light toward a glazing (102) that comprises two glass lites (103 and 105) having a PVB interlayer (106) disposed between them that contains narrow-band absorbers that absorb at three discrete wavelength ranges as depicted (104), although two wavelength ranges may be sufficient in combination with the reflector. The projector is adapted to provide an image to the glazing that is reflected toward a viewer (107) from the first air-glass interface defined by lite (103). Since in this embodiment, the image is reflected from the first glass lite (103), the narrow-band reflector may be positioned in the first glass lite (103), between the first glass lite (103) and the interlayer (106), in or on the PVB interlayer (106), between the PVB interlayer (106) and the second glass lite (105), or on or in the second glass lite (105). You will recall that the unwanted secondary image is formed at the second glass lite/air interface, such that any of these positions would reject the light causing this ghosting.

According to the invention, the display system is likewise provided with narrow-band absorbers, which may be any molecule, compound, or particle that absorbs light in the desired wavelength range. These would typically be absorbing dyes but could also comprise absorbing pigments. Different narrow band absorbers will be employed to absorb at the peak wavelength for each of the projector colors employed. The molecules are ideally incorporated at concentrations that will absorb >50% of the light at each of the peak color wavelengths. In the case of pigments, it is understood that particle size would be minimized to reduce unwanted haze.

By aligning the absorbers with the projector emission, we can effectively absorb the light that constitutes the secondary (ghost) image as it passes through the interlayer twice, eliminating or reducing the need for a wedged interlayer, or assisting the wedge interlayer to reduce the intensity of any secondary images.

In a preferred aspect, the narrow-band absorbers comprise dyes or pigments that selectively absorb light in discrete wavelength ranges, typically corresponding broadly, for example, to approximately 625-740nm (red), 500nm to 565nm(green), and 430-490nm (blue).

Thus, when dyes or pigments are used as narrow-band absorbers, the absorption peak, or $\lambda$max of the dye or pigment, should be aligned as closely as practicable with the projector emission wavelengths, e.g. 443, 524, 643nm. Projectors with different wavelengths can also be employed, provided a balanced RGB output can be achieved to provide a normal color balance. The absorption peak width (FWHM) should be as narrow as possible to achieve sufficient absorption of the desired projector emission, with a minimum impact on visible transmission. FWHM should thus desirably be less than 50nm, or less than 30nm. Failing to meet this requirement will either result in low contrast ratio or low Tvis Absorbers

should have no, or limited, secondary absorption peaks or shoulders within the range of interest of visible light transmission. When placed in a PVB substrate, the absorbers should be soluble in plasticizer in an amount, for example, from about 30ppm to about 750ppm, in order to compound into PVB. The desired concentration will vary based on the molar absorptivity of the absorber, the thickness of the PVB substrate, and the plasticizer level in the PVB substrate, and concentrations outside this range may be possible as well. When the absorbers are dissolved into a solvent for coating, higher concentrations are often typical or desired in order to minimize the coating thickness. For use in PVB, absorbers should have sufficient thermal stability; a minimum of 200°C for extrusion or 150°C for coating and autoclave lamination. Absorbers should also have sufficient UV stability to survive outdoor exposure in a windscreen for >5 years, when a windscreen is intended. The light-absorbing substrate may also incorporate an ultra-violet (UV) blocker; the UV blocker has negligible effect in the visible range. The UV blocker may be a dye that is disposed in or onto the polymer substrate. The UV dye absorber may be coated on the outer surface of the polymer substrate to reduce the exposure of the narrow band absorbers and increase the UV stability of the system. Examples of UV absorber dyes are Maxgard and Cyasorb UV stabilizers. The light absorbing substrate may also incorporate NIR absorbers in amounts that have limited effect on the overall VLT. The NIR absorbers will provide reduction of NIR solar radiation if desired.

In one aspect, the narrow-band absorbers comprise pigments. Pigments are differentiated from dyes in that their solubility characteristics in the medium are significantly reduced and are generally considered to be insoluble in the medium. Pigments are comprised of two general classes of molecules, organic and inorganic. Examples of suitable inorganic pigments include compounds or complexes of aluminum, copper, cobalt, manganese, gold, iron, calcium, argon, bismuth, lead, titanium, tin, zinc, mercury, antimony, barium or combinations thereof, including silicates, oxides, phosphates, carbonates, sulfates, sulfides, and hydroxides. *(*Völz, Hans G.; et al. "Pigments, Inorganic". Ullmann's Encyclopedia of Industrial Chemistry. Weinheim: Wiley-VCH. doi:10.1002/14356007.a20_243.pub2 ^ Müller, Hugo; Müller, Wolfgang; Wehner, Manfred; Liewald, Heike. "Artists' Colors". Ullmann's Encyclopedia of Industrial Chemistry. Weinheim: Wiley-VCH. doi:10.1002/14356007.a03_143.pub2*.)*

Examples of suitable organic pigments include the same chemical classes as described herein for dyes, with differentiated solubility imparted by suitable substituents, most commonly based on aromatic hydrocarbons. When pigments are used as the narrow-band absorbers, they may be present in amounts from about 0.001% to about 50%, or from 0.001% to 25%, or from 0.001% to 10%, or from 0.001 to 1%, or from 0.001% to 0.1 %.

The particle size of the pigments may be important, in order to achieve the desired optical quality. Particle size and shape affect both color strength and scattering, which directly impact overall optical quality as well as haze and clarity. Larger particle size and aspect ratio may decrease color strength and increase or decrease scattering, improving haze and, conversely, smaller particle size and aspect ratio increase color strength, and increase or decrease scattering, decreasing haze. Thus, the average particle size of the pigments may be from about 10 nm to about 500 micron, or from 100 nm to 100 micron.

In one aspect, the haze caused by the pigments will be less than 5%, 2%, 1.5%, 1%, or 0.5%, as measured by a haze-meter such as the Haze-guard from BYK-Gardner Instruments, according to ASTM D-1003.

In another aspect, the narrow-band absorbers comprise dyes. Dyes suitable for use according to the invention typically possess color because they absorb light in the visible spectrum (about 400 to about 700 nm), have at least one chromophore (color-bearing group), have a conjugated system, that is, a structure with alternating double and single bonds, and exhibit resonance of electrons, a stabilizing force in organic compounds. Most dyes also contain groups known as auxochromes (color helpers), examples of which are carboxylic acid, sulfonic acid, amino, and hydroxyl groups. While these are not responsible for color, their presence can shift the color of a colorant and may be used to influence dye solubility.

According to the invention, the display systems comprise one or more narrow band absorbers, that collectively absorb light selectively within three wavelength ranges in the visible spectrum. Thus, a single narrow band absorber may absorb light in more than one wavelength range. The narrow band absorber may have more than one absorption peak, each absorption peak absorbing light in a different wavelength range. Careful selection or design of the narrow band absorber may provide more than one absorption peak, each aligned with a different wavelength range. The narrow band absorber may contain more than one chromophore, the part of the molecule responsible for absorption in the visible range of the electromagnetic spectrum. The narrow band absorber may also comprise more than one dye or pigment that are covalently bonded together to provide one chemical structure having more than one absorption peak, each aligned with a different projector wavelength range.

One class of suitable dyes are polymethine dyes. Polymethine dyes are molecules whose chromophoric system consists of conjugated double bonds (polyenes), where n is uneven, e.g., 1, 3, 5, 7, etc., flanked by two end groups, X and X'. X and X' are most commonly O or N derivatives and are categorized into subclasses.

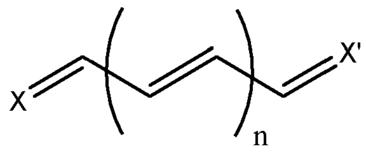

Subclasses can be defined as:

| | |
|---|---|
| X = X' | Polymethine dyes |
| X = X' = N | Cyanine dyes |
| X = X' = O | Oxonole dyes |
| X ≠ X' | Meropolymethine dyes |
| X = N, X' = O | Merocyanine dyes |

A special case is zwitterionic polymethine dyes, an example shown here:

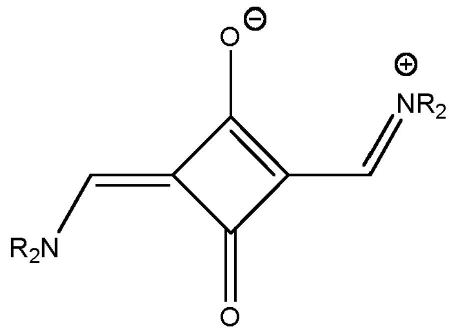

These conjugated systems have the ability to be stabilized through delocalized electronic states and can be tuned with different functional groups as substituents to change the electronic absorption properties of their UV spectrum. As a result, they can exist as neutral molecules or salts (charged species paired with a counter ion). The nitrogen in these molecules can exist in a neutral state or as a positively charged group, for example as an iminium ion paired with an anion. Examples or subclasses of polymethine dyes include cyanine dyes, hemicyanine dyes, streptocyanine dyes, merocyanine dyes, oxonol dyes, porphyrin dyes, tetraazaporphyrin dyes, phthalocyanine dyes, styryl dyes, di- and triarylmethine dyes, squaraine dyes, squarate dyes, and croconate polymethine dyes.

Polymethine dyes are generally $\alpha,\omega$-substituted odd polyenes). The dyes can be functionalized in innumerable ways to derive differentiated absorption peaks and widths. Examples of groups used to functionalize dyes include linear aliphatic, cycloaliphatic, aromatic, and heteroaromatic moieties and combinations thereof. Porphyrin dyes, tetraazaporphyrin dyes and phthalocyanine dyes can form complexes with metals to derive differentiated absorption peaks and widths as well. Examples of metals that may form complexes with porphyrin dyes, tetraazaporphyrin dyes and phthalocyanine dyes include transition metals, post-transition metals, alkaline earth metals and alkali metals. In some cases, the metal complexes may contain metal oxides or the metal complexes may contain a halide.

Examples of dyes that may selectively absorb light at wavelength ranges from approximately 625-740nm (red) include N-(4-((4-(Dimethylamino)phenyl)(3-methoxyphenyl)methylene)- cyclohexa-2,5-dien-1-ylidene)-N-methylmethanaminium (Epolin 5262), Epolin 5394, Epolin 5839, Epolin 6661, Exciton ABS626, Exciton ABS642, Cyclobutenediylium, 1,3-bis[(1,3-dihydro-3,3-dimethyl-1-propyl-2H-indol-2ylidene)methyl]-2,4-dihydroxy-, bis (inner salt) (QCR Solutions Corp VIS630A), QCR Solutions Corp VIS637A, QCR Solutions Corp VIS641A, QCR Solutions Corp VIS643A, QCR Solutions Corp VIS644A, QCR Solutions Corp VIS651B, QCR Solutions Corp VIS 654C.

Examples of dyes that may selectively absorb light at wavelength ranges from approximately 500nm to approximately 565nm (green) include Epolin 5396, Epolin 5838, 3-pyridinecarbonitrile, 1-butyl-5-[2-(1,3-dihydro-1,3,3-trimethyl-2H-indol-2-ylidene)ethylidene]-1,2,5,6-tetrahydro-4-methyl-2,6-dioxo- (QCR Solutions Corp VIS518A), QCR Solutions Corp VIS523A, QCR Solutions Corp VIS542A.

Examples of dyes that may selectively absorb light at wavelength ranges from approximately 430 to 485nm (blue) include Propanedinitrile, 2-[[4-[[2-(4-cyclohexylphenoxy)ethyl]ethylamno]-2-methylphenyl]methylene]- (Epolin 5843), Epolin 5852, Epolin 5853, Epolin 5854, Exciton ABS433, Exciton ABS439, Exciton ABS454, QCR Solutions Corp VIS441A.

Examples of dyes suitable for use according to the invention include: Epolin 5262:

CAS Registry Number 42297-44-9
N-(4-((4-(Dimethylamino)phenyl)(3-methoxyphenyl)methylene)-cyclohexa-2,5-dien-1-ylidene)-N-methylmethanaminium

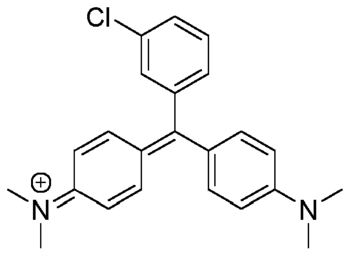

Chemical Formula: $C_{23}H_{24}ClN_2^+$

Epolin 5843
CAS Registry number 54079-53-7
Propanedinitrile, 2-[[4-[[2-(4-cyclohexylphenoxy)ethyl]ethylamno]-2- methylphenyl]methylene]-

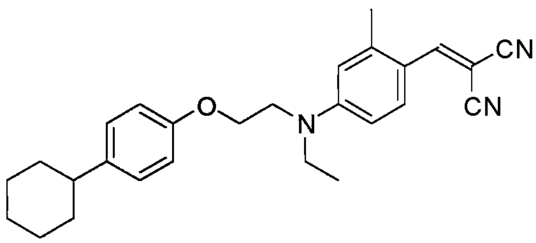

Chemical Formula: $C_{27}H_{31}N_3O$
QCR VIS518A
CAS registry number: 201420-04-4
3-pyridinecarbonitrile, 1-butyl-5-[2-(1,3-dihydro-1,3,3-trimethyl-2H- indol-2-ylidene)ethylidene]-1,2,5,6-tetrahydro-4-methyl-2,6-dioxo-

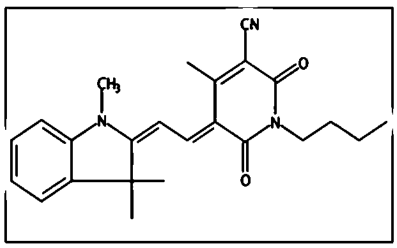

QCR VIS630A
CAS registry number: 201557-75-5
Cyclobutenediylium, 1,3-bis[(1,3-dihydro-3,3-dimethyl-1-propyl-2*H*- indol-2ylidene)methyl]-2,4-dihydroxy-, bis (inner salt)

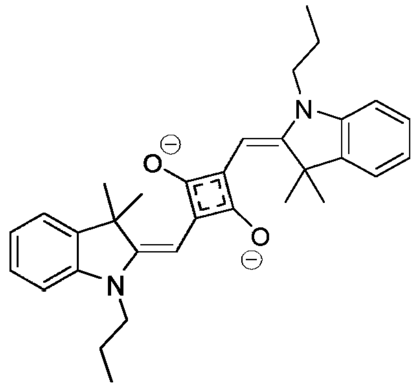

Chemical Formula: $C_{32}H_{38}N_2O_2^{2-}$

Other dyes suitable for use according to the invention include those disclosed in JP6674174 B2, both methine dyes and metal complex structures. Thus, in this aspect, a metal complex compound represented by the formula (1) may be used:

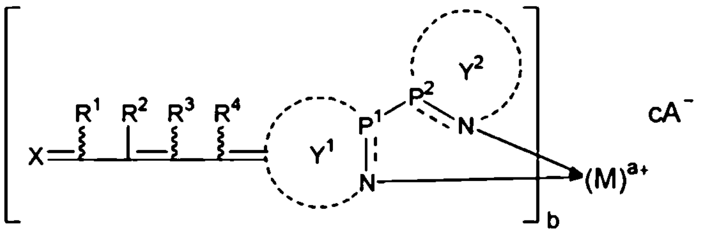

(1)

where R1 to R4 are each independently a substituted/unsubstituted alkyl group or the like, X is a monocyclic or polycyclic heterocyclic group or the like, a ring Y1 and a ring Y2 are each independently monocyclic or polycyclic heterocycle, P1 and P2 are each independently C or N, M is Group 3 to Group 12 atom, the arrow is a coordinate bond, a to c are integers of 1 to 3, A is a halide ion or an anion compound such as BF4-.

Metal complex dyes are also suitable for use according to the invention. Metal-complex dyes may be broadly divided into two classes: 1:1 metal complexes and 1:2 metal complexes. The dye molecule will be typically a monoazo structure containing additional groups such as hydroxyl, carboxyl or amino groups, which are capable of forming strong coordination complexes with transition metal ions. Typically, chromium, cobalt, nickel and copper are used.

Azo dyes are also suitable for use according to the invention. The most prevalent metal complex dyes for textile and related applications are metal complex azo dyes. They may be 1:1 dye:metal complexes or 2:1 complexes and contain mainly one (monoazo) or two (disazo) azo groups.

Other dyes suitable for use according to the invention include those disclosed in JP6417633. Thus, azo dyes may be used which are tetraazaporphyrin compounds which are mixtures of 4 kinds of isomers obtained by heat cyclization reaction of a metal or a metal derivative with a cis body of 1,2-dicyanoethylene compound represented by the following formula 1:

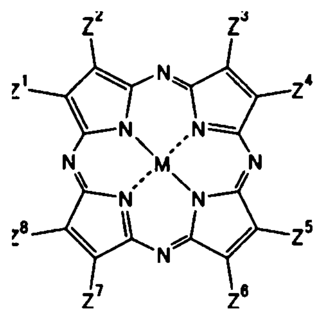

(1)

in which one of two substitutions Z1 and Z2 is a cyclic alkyl group which may have a substituent and the other is an aryl group which may have a substituent

Others include those metal complex dyes disclosed in WO201004833.

Others include those disclosed in JP2007211226, which discloses a coloring matter for use in an optical filter which is said to be excellent in durability, capable of cutting a light having unnecessary wavelengths existing in 540-600 nm in order to clear the contrast of an image, and capable of preventing the mirroring and reflection of a light of 540-560 nm from an external light such as a fluorescent lamp, in order to maintain the distinctness of an indicated image. The compounds disclosed are rhodamine-based compounds expressed by the general formula (1):

Rhodamine based
Peak, 540 - 600nm
Width, n.a.

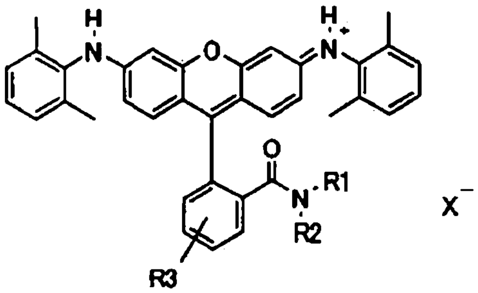

(1)

wherein, R1 and R2 are each an aryl group having no substituent or a substituent selected from a methyl group and the like and a halogen and having the number of nuclear carbons of 6-24; R3 is a hydrogen atom, a methyl group or a halogen; and X(sup -) is a counter ion). Xanthene dyes, rhodamine dyes, fluorescein dyes and substituted versions of these dyes are also useful dyes according to the invention.

Other dyes useful according to the invention includecarbocyclic azo dyes, heterocyclic azo dyes, indole-based dyes, pyrazolone based eyes, Pyridone based yes, Azopyrazolone based dyes, S or S/N heterocyclic, metallized azo dyes, Anthraquinone based dyes, Indigoid based dyes, Cationic dyes, Di- and triarylcarbenium dyes, Phthalocyanine dyes, Sulfur Dyes, Metal complexes as dyes, Quinophthalone Dyes, Nitro and Nitroso dyes, Stilbene dyes, Formazan dyes, Triphenodioxazines, Benzodifuranones.

Some dyes useful according to the invention may be proprietary, that is, the actual chemical structure of the dye may not be known. Those skilled in the art of dye preparation and selection can select a suitable dye for use according to the invention based on its particular absorption spectrum, which is typically available from the vendor even when the identity of the molecule itself is not disclosed. Those skilled in the art of compounding, for example PVB interlayers, will understand that a dye, when present in the PVB itself, must survive the processing parameters, which include time at relatively high temperatures, in the presence of plasticizers that might degrade the dye.

When used in PVB interlayers, the narrow-band absorbers should be soluble or dispersible in plasticizer (~30-750ppm) to compound into PVB or into some solvent for coating (at higher concentration). In this aspect, the absorbers should have sufficient thermal stability, for example a minimum 200°C for extrusion or 150°C for coating/autoclave lamination. Further, the absorbers should have sufficient UV stability for the intended use, for example to survive outdoor exposure in a windscreen for >5 years.

Ideally, the dyes useful according to the invention will exhibit absorption peaks ($\lambda_{max}$) that are aligned with the projector emission wavelength ranges, for example, of 443nm, 524nm, and 643nm. As noted, projectors with different wavelengths may also be employed, so long as a balanced RGB output can be achieved to provide a desired color balance. The absorption peak width (as characterized by the Full Width at Half Maximum or FWHM) of the dye should also be as narrow as possible to achieve sufficient absorption of the desired projector wavelengths with a minimum impact on visible transmission. Thus, the FWHM of the dyes may be, for example, less than 10nm, or less than 20nm, or less than 30nm, or less than 40nm, or less than 50nm, or less than 60nm. If the wavelength range at which the dyes absorb light is too broad, it will be difficult to achieve the desired contrast ratio and/or $T_{vis}$ values. We note that the FWHM of each of the dyes used may not be the same, and the Tvis value is a weighted average with the human eye response.

Ideally, the narrow-band absorbers will have no or limited secondary absorption peaks or shoulders within the wavelengths of the visible spectrum of light.

Dye Absorptivity: How strongly a dye absorbs, known as its absorptivity, does not necessarily impact its performance according to the invention. It is, however, a factor in determining the amount of dye that is required to be incorporated in or on the light absorbing substrate. If the absorptivity of a dye, $\varepsilon$, is known, the Beer-Lambert Law, $A = \varepsilon c \ell$, can be used to calculate the concentration of dye needed, c, to achieve the desired level of absorption, A, from a given light absorbing substrate with thickness $\ell$. Dye absorptivities useful according to the invention may range, for example, from 10 to 1000, or from 20 to 800, or from 60 to 700 L/g/cm.

The term contrast ratio as used herein is defined as the ratio of the measured intensity of the primary image divided by the measured intensity of the secondary, or ghost, image in a HUD system, corrected for any background intensity. When the primary and secondary images are not properly aligned as would be typical when utilizing a wedge-type interlayer, the measured contrast ratio indicates how perceptible the secondary image will be to the viewer. Acceptable contrast ratios which minimize the visibility of the ghost image are dependent on the separation distance between the primary and secondary images. In general, with typical image separation distances that are experienced in automotive windscreens without a tapered, or wedged, interlayer, contrast ratios greater than 30:1, preferably greater than 50:1, and most preferably greater than 70:1 are desired to create an acceptable HUD image with no, or limited, perceivable ghosting.

In order to measure the contrast ratio of test images projected onto the laminates used in the Examples, a test rig was built that utilizes a projector producing a solid color line image approximately 3mm x 100mm that is projected incident onto the Example laminate's surface at 56.5 degrees from normal, with a uniform black background. The resulting image reflected off of the laminate is captured by a machine vision camera and lens focused on the virtual image of the original 3mm x 100mm real image. White, blue, green, and red solid line images are all captured in this manner and subsequently analyzed to determine the contrast ratio of the intensities of the primary to secondary image. Image analysis can be conducted using Origin Pro, or any similar software package that can convert a digital image file to a matrix of pixel intensities for subsequent analysis.

According to the invention, an important design requirement is to achieve a high contrast ratio of the primary to secondary image, while still maintaining a minimum 70% $T_{vis}$ as may be required by automotive safety standards. In one aspect, then, the target contrast ratio is >30:1, >50:1, and preferably >70:1. As used herein, the contrast ratio is measured and calculated according to the following equation, where $I_p$ is the average intensity of the primary image, $I_s$ is the average intensity of the secondary image, and $I_b$ is the intensity of the black background.

$$CR = \frac{I_p - I_b}{I_s - I_b}$$

The glazings useful according to the invention comprise a first transparent rigid substrate and a second transparent rigid substrate. These two rigid substrates are preferably glass, but may be another material such as polycarbonate, acrylic, polyester, copolyester, and combinations thereof. The two transparent rigid substrates may be of the same material, or two different materials. According to the invention, the light-absorbing substrate may be placed between the two transparent rigid substrates, as discussed above.

When the rigid substrates are glass, and when a high CR is desired with a minimum impact on $T_{vis}$, it is preferred that clear glass, or low iron/ultraclear glass, is used. Additionally, the contrast ratio of the image can be further improved by orienting the glass such that the tin side of the inner glass lite is oriented toward the vehicle interior, i.e. Surface 4, and the air side of the outer glass lite is oriented toward the vehicle exterior, i.e. Surface 1. When the glass is oriented in this manner, the higher refractive index of the tin surface boosts the primary image intensity relative to that of the secondary image and can improve contrast ratio by up to 6%.

The following examples set forth suitable and/or preferred methods and results in accordance with the invention. It is to be understood, however, that these examples are provided by way of illustration and nothing therein should be taken as a limitation upon the overall scope of the invention. All percentages are by weight unless otherwise specified.

**Example 1. (Prophetic)**

As depicted in Figure 5, a laser projector (100) is provided that emits light at wavelength ranges of 443nm, 524nm, and 643nm (101), each of which ranges have a width less than about 2nm, as defined by FWHM. The projector is oriented to emit light toward a glazing (102) that comprises two glass lites (103 and 105) having a PVB interlayer (106) disposed between them that contains two dyes, Dye R and Dye G, that absorb at two of the discrete wavelength ranges as depicted (104). The projector is adapted to provide an image to the glazing that is reflected toward a viewer (107) from the first air-glass interface defined by lite (103).

Dye R absorbs light centered at about 643nm, and has a FWHM of about 30nm, and an absorptivity of about 90 L/g/cm and is thus provided in the PVB interlayer in an amount of about 140ppm.

Dye G absorbs light centered at about 523nm, and has a FWHM of about 25nm, and an absorptivity of about 60 L/g/cm and is thus provided in the PVB interlayer in an amount of about 250ppm.

Structure B is a narrow-band reflector that reflects light centered at about 443nm, and has a FWHM of about 30nm, at an angle of incidence of about 45 degrees.

**Examples 2a - 2g are samples that each contained a single absorber that was laminated and tested**

**Example 2a**

A laser projector was provided that emits blue light at a wavelength of 443nm and a width less than about 2nm, as defined by FWHM. The projector was oriented to emit light toward a glazing that comprised two glass lites having a PVB interlayer disposed between them that contains Dye B. The projector was adapted to provide an image to the glazing that was reflected toward a camera from the first air-glass interface.

Dye B was ABS 439 from Exciton, which absorbs light centered at about 447nm, and has a FWHM of about 33nm, and an absorptivity of about 200 L/g/cm, and was provided in the PVB interlayer in an amount of about 52ppm.

When the projector projected blue light, the contrast ratio of the primary to secondary image as defined above was measured to be 30 to 1, as compared to a calculated value of 27:1.

**Example 2b**

A laser projector was provided that emits blue light at wavelength of 443nm and a width less than about 2nm, as defined by FWHM. The projector was oriented to emit light toward a glazing that comprises two glass lites having a PVB interlayer disposed between them that contains Dye B. The projector was adapted to provide an image to the glazing that was reflected toward a camera from the first air-glass interface.

Dye B was 5843 from Epolin, which absorbs light centered at about 445nm, and has a FWHM of about 77nm, and an absorptivity of about 137 L/g/cm, and was provided in the PVB interlayer in an amount of about 100ppm.

When the projector projected blue light, the contrast ratio of the primary to secondary image as defined above was measured to be 23 to 1.

**Example 2c**

A laser projector was provided that emits blue light at wavelength of 443nm and a width less than about 2nm, as defined by FWHM. The projector was oriented to emit light toward a glazing that comprises two glass lites having a PVB interlayer disposed between them that contains Dye B. The projector was adapted to provide an image to the glazing that was reflected toward a camera from the first air-glass interface.

Dye B was 5852 from Epolin, which absorbs light centered at about 437nm, and has a FWHM of about 50nm, and an absorptivity of about 301 L/g/cm, and was provided in the PVB interlayer in an amount of about 98ppm.

When the projector projected blue light, the contrast ratio of the primary to secondary image as defined above was measured to be 34 to 1.

**Example 2d**

A laser projector was provided that emits blue light at wavelength of 443nm and a width less than about 2nm, as defined by FWHM. The projector was oriented to emit light toward a glazing that comprises two glass lites having a PVB interlayer disposed between them that contains Dye B. The projector was adapted to provide an image to the glazing that was reflected toward a camera from the first air-glass interface.

Dye B was 5854 from Epolin, which absorbs light centered at about 442nm, and has a FWHM of about 80nm, and an absorptivity of about 178 L/g/cm, and was provided in the PVB interlayer in an amount of about 111ppm.

When the projector projected blue light, the contrast ratio of the primary to secondary image as defined above was measured to be 44 to 1.

**Example 2e**

A laser projector was provided that emits green light at wavelength of 524nm and a width less than about 2nm, as defined by FWHM. The projector was oriented to emit light toward a glazing that comprises two glass lites having a PVB interlayer disposed between them that contains Dye G. The projector was adapted to provide an image to the glazing that was reflected toward a camera from the first air-glass interface.

Dye G is VIS518A from QCR Solutions Corp, which absorbs light centered at about 526nm, and has a FWHM of about 60nm, and an absorptivity of about 293 L/g/cm, and was provided in the PVB interlayer in an amount of about 40ppm.

When the projector projected green light the contrast ratio of the primary to secondary image as defined above was measured to be 173 to 1.

**Example 2f**

A laser projector was provided that emits red light at wavelength of 643nm and a width less than about 2nm, as

defined by FWHM. The projector is oriented to emit light toward a glazing that comprises two glass lites having a PVB interlayer disposed between them that contains Dye R. The projector was adapted to provide an image to the glazing that was reflected toward a camera from the first air-glass interface.

Dye R is ABS 642 from Exciton, which absorbs light centered at about 643nm, and has a FWHM of about 25nm, and an absorptivity of about 185 L/g/cm, and was provided in the PVB interlayer in an amount of about 103ppm.

When the projector projected red light the contrast ratio of the primary to secondary image as defined above was measured to be 15 to 1.

### Example 2g

A laser projector was provided that emits red light at wavelength of 643nm and a width less than about 2nm, as defined by FWHM. The projector is oriented to emit light toward a glazing that comprises two glass lites having a PVB interlayer disposed between them that contains Dye R. The projector was adapted to provide an image to the glazing that was reflected toward a camera from the first air-glass interface.

Dye R is 6661 from Epolin, which absorbs light centered at about 673nm, and has a FWHM of about 75nm, and an absorptivity of about 82 L/g/cm, and was provided in the PVB interlayer in an amount of about 195ppm.

When the projector projected red light the contrast ratio of the primary to secondary image as defined above was measured to be 18 to 1.

### Example 3. (Prophetic)

Turning now to Figure 6, we depict a glazing according to the invention. The glazing includes a first transparent rigid substrate (210), a second transparent rigid substrate (212), and a PVB interlayer (211) positioned between the first and the second transparent rigid substrates. The PVB interlayer is provided with at least three narrow-band rejectors that selectively reject light within three discrete wavelength ranges (204).

### Example 4. (Prophetic) Modeled multilayer dielectric stacks

The NIR reflector narrow band absorber shown in figure 4 (402) is for example constructed by alternating layers of high index (411) and low index (412) materials. For example, at an incident angle of 45 degrees; alternating 7 layers of 158nm NbOx and 230nm of $SiO_2$, starting with the high index would have a spectrum with a NIR peak centered at 1249nm with a FWHM of approximately 460nm and a narrow peak in the visible centered at 443nm with a FWHM of approximately 47nm. Alternatively, alternating 11 layers of 156nm NbOx and 193nm of AlOx, starting with the high index would have a spectrum with a NIR peak centered at 1258nm with a FWHM of approximately 265nm and a narrow peak in the visible centered at 443nm with a FWHM of approximately 30nm

The foregoing description of various embodiments of the invention has been presented for purposes of illustration and description. It is not intended to be exhaustive or to limit the invention to the precise embodiments disclosed. Numerous modifications or variations are possible in light of the above teachings. The embodiments discussed were chosen and described to provide the best illustration of the principles of the invention and its practical application to thereby enable one of ordinary skill in the art to utilize the invention in various embodiments and with various modifications as are suited to the particular use contemplated. All such modifications and variations are within the scope of the invention as determined by the appended claims when interpreted in accordance with the breadth to which they are fairly, legally, and equitably entitled.

## Claims

**1.** A display system for displaying information, the display system comprising:

a. a glazing (102,202) that includes a first transparent rigid substrate, a second transparent rigid substrate, and an interlayer positioned between the first and the second transparent rigid substrates;
b. a projector (100) that emits light toward the glazing at three discrete wavelength ranges in the visible spectrum;
c. one or more narrow-band absorbers, disposed in a vision area of the glazing, that selectively absorb light within at least one of the three discrete wavelength ranges; and
d. one or more narrow-band reflectors, disposed in the vision area of the glazing, that selectively reflect light within at least one of the three discrete wavelength ranges, **characterised in that** at least one of the narrow-band reflectors exhibits both a narrow secondary reflection in the visible range that selectively reflects the light within at least one of the three wavelength ranges emitted by the projector, and a primary reflection in the near-infrared

range, in the same multilayer construction.

2. The display system of claim 1, wherein the one or more narrow-band reflectors comprises a dielectric multilayer stack.

3. The display system of any of the preceding claims, wherein the dielectric multilayer stack comprises alternating high and low index materials that produce a primary peak in the NIR range and a secondary narrow peak in the visible range.

4. The display system of any of the preceding claims, wherein the alternating high and low index materials are polymers.

5. The display system of any of the preceding claims, wherein the alternating high and low index materials are metal oxides.

6. The display system of any of the preceding claims, wherein the one or more narrow-band reflectors reflects in the blue range of visible light.

7. The display system of any of the preceding claims, wherein the one or more narrow-band reflectors reflects in the green range of visible light.

8. The display system of any of the preceding claims, wherein the one or more narrow-band reflectors comprises two reflectors that reflect in the blue range of visible light and in the green range of visible light, respectively.

9. The display system of any of the preceding claims, wherein the one or more narrow-band reflectors is provided in the interlayer.

10. The display system of any of the preceding claims, wherein one or more narrow-band reflectors is in or on one of the rigid substrates.

11. The display system of any of the preceding claims, wherein the one or more narrow-band reflectors are in a coating or film attached to one of the two rigid substrates.

12. The display system of any of the preceding claims, wherein the one or more narrow band absorbers are in the interlayer.

13. The display system of any of the preceding claims, wherein the one or more narrow band absorbers are in or on one of the rigid substrates.

14. The display system of any of the preceding claims, wherein the one or more narrow band absorbers are in a coating or film attached to one of the two rigid substrates.

15. The display system of any of the preceding claims, wherein the interlayer is provided with a wedge portion which aligns primary and secondary images reflected from the glazing.

16. The display system of any of the preceding claims, wherein the three discrete wavelength ranges emitted by the projector include light of 445nm, 515nm, and 642nm.

17. The display system of any of the preceding claims, wherein the three discrete wavelength ranges emitted by the projector include light of 445nm, 550nm, and 642nm.

18. The display system of any of the preceding claims, wherein one of the discrete wavelength ranges emitted by the projector includes light having a wavelength selected from one or more of 635, 638, 650, or 660.

19. The display system of any of the preceding claims, wherein the projector is a DPSS laser-based projector, and wherein the three discrete wavelength ranges emitted by the projector include light of 457nm, 532nm, and 671nm, and have a FWHM from about 0.5nm to about 50nm.

20. The display system of any of the preceding claims, wherein the projector is a DPSS laser-based projector, and wherein the three discrete wavelength ranges include light of 473nm, 532nm, and 671nm, and have a FWHM from about

0.5nm to about 50nm.

**21.** The display system of any of the preceding claims, wherein the narrow-band absorbers are selected from dyes and pigments.

**22.** The display system of any of the preceding claims, wherein at least one of the narrow-band absorbers is a polymethine dye.

**23.** The display system of any of the preceding claims, wherein the interlayer comprises PVB.

**24.** The display system of any of the preceding claims, wherein the narrow band absorbers are in a film positioned between two PVB layers in the interlayer.

**25.** The display system of any of the preceding claims, wherein the glazing incorporates one or more UV light blockers.

**26.** The display system of any of the preceding claims, wherein the UV blockers are UV dye absorbers forming a layer blocking UV radiation to the narrow band dyes.

**27.** The display system of any of the preceding claims, wherein the glazing system incorporates NIR absorbers.

## Patentansprüche

**1.** Anzeigesystem zum Darstellen von Informationen, wobei das Anzeigesystem Folgendes umfasst:

a. einen Überzug (102, 202), der ein erstes transparentes starres Substrat, ein zweites transparentes starres Substrat und eine zwischen dem ersten und dem zweiten transparenten starren Substrat positionierte Zwischenschicht beinhaltet;
b. einen Projektor (100), der Licht in drei diskreten Wellenlängenbereichen des sichtbaren Spektrums in Richtung des Überzugs abstrahlt;
c. einen oder mehrere Schmalbandabsorber, die in einem Sichtbereich des Überzugs angeordnet sind und selektiv Licht in mindestens einem der drei diskreten Wellenlängenbereiche absorbieren; und
d. einen oder mehrere Schmalbandreflektoren, die im Sichtbereich des Überzugs angeordnet sind und selektiv Licht in mindestens einem der drei diskreten Wellenlängenbereiche reflektieren, **dadurch gekennzeichnet, dass**

mindestens einer der Schmalbandreflektoren sowohl eine schmale Sekundärreflexion im sichtbaren Bereich, die das Licht selektiv in mindestens einem der drei vom Projektor abgestrahlten Wellenlängenbereiche reflektiert, als auch eine Primärreflexion im Nahinfrarotbereich im selben Mehrschichtaufbau aufweist.

**2.** Anzeigesystem nach Anspruch 1, wobei der eine oder die mehreren Schmalbandreflektoren einen dielektrischen Mehrschichtstapel umfassen.

**3.** Anzeigesystem nach einem der vorhergehenden Ansprüche, wobei der dielektrische Mehrschichtstapel abwechselnd hoch- und niedrigbrechende Materialien umfasst, die einen primären Peak im NIR-Bereich und einen sekundären schmalen Peak im sichtbaren Bereich erzeugen.

**4.** Anzeigesystem nach einem der vorhergehenden Ansprüche, wobei die abwechselnd hoch- und niedrigbrechenden Materialien Polymere sind.

**5.** Anzeigesystem nach einem der vorhergehenden Ansprüche, wobei die abwechselnd hoch- und niedrigbrechenden Materialien Metalloxide sind.

**6.** Anzeigesystem nach einem der vorhergehenden Ansprüche, wobei der eine oder die mehreren Schmalbandreflektoren im blauen Bereich des sichtbaren Lichts reflektieren.

**7.** Anzeigesystem nach einem der vorhergehenden Ansprüche, wobei der eine oder die mehreren Schmalbandreflektoren im grünen Bereich des sichtbaren Lichts reflektieren.

**8.** Anzeigesystem nach einem der vorhergehenden Ansprüche, wobei der eine oder die mehreren Schmalbandreflektoren zwei Reflektoren umfassen, die im blauen Bereich des sichtbaren Lichts bzw. im grünen Bereich des sichtbaren Lichts reflektieren.

**9.** Anzeigesystem nach einem der vorhergehenden Ansprüche, wobei der eine oder die mehreren Schmalbandreflektoren in der Zwischenschicht bereitgestellt sind.

**10.** Anzeigesystem nach einem der vorhergehenden Ansprüche, wobei ein oder mehrere Schmalbandreflektoren sich in oder auf einem der starren Substrate befinden.

**11.** Anzeigesystem nach einem der vorhergehenden Ansprüche, wobei der eine oder die mehreren Schmalbandreflektoren sich in einer Beschichtung oder einem Film befinden, die/der auf einem der zwei starren Substrate angebracht ist.

**12.** Anzeigesystem nach einem der vorhergehenden Ansprüche, wobei der eine oder die mehreren Schmalbandabsorber sich in der Zwischenschicht befinden.

**13.** Anzeigesystem nach einem der vorhergehenden Ansprüche, wobei der eine oder die mehreren Schmalbandabsorber sich in oder auf einem der starren Substrate befinden.

**14.** Anzeigesystem nach einem der vorhergehenden Ansprüche, wobei der eine oder die mehreren Schmalbandabsorber sich in einer Beschichtung oder einem Film befinden, die/der auf einem der zwei starren Substrate angebracht ist.

**15.** Anzeigesystem nach einem der vorhergehenden Ansprüche, wobei die Zwischenschicht mit einem keilförmigen Abschnitt bereitgestellt ist, der die vom Überzug reflektierten Primärund Sekundärbilder aufeinander ausrichtet.

**16.** Anzeigesystem nach einem der vorhergehenden Ansprüche, wobei die drei diskreten Wellenlängenbereiche, die vom Projektor abgestrahlt werden, Licht von 445 nm, 515 nm und 642 nm beinhalten.

**17.** Anzeigesystem nach einem der vorhergehenden Ansprüche, wobei die drei diskreten Wellenlängenbereiche, die vom Projektor abgestrahlt werden, Licht von 445 nm, 550 nm und 642 nm beinhalten.

**18.** Anzeigesystem nach einem der vorhergehenden Ansprüche, wobei einer der diskreten Wellenlängenbereiche, die vom Projektor abgestrahlt werden, Licht beinhaltet, das eine Wellenlänge aufweist, die aus einem oder mehreren von 635, 638, 650 oder 660 ausgewählt ist.

**19.** Anzeigesystem nach einem der vorhergehenden Ansprüche, wobei der Projektor ein Projektor auf DPSS-Laserbasis ist und wobei die drei diskreten Wellenlängenbereiche, die vom Projektor abgestrahlt werden, Licht von 457 nm, 532 nm und 671 nm beinhalten und eine FWHM von 0,5 nm bis etwa 50 nm aufweisen.

**20.** Anzeigesystem nach einem der vorhergehenden Ansprüche, wobei der Projektor ein Projektor auf DPSS-Laserbasis ist und wobei die drei diskreten Wellenlängenbereiche Licht von 473 nm, 532 nm und 671 nm beinhalten und eine FWHM von 0,5 nm bis etwa 50 nm aufweisen.

**21.** Anzeigesystem nach einem der vorhergehenden Ansprüche, wobei die Schmalbandabsorber aus Farbstoffen und Pigmenten ausgewählt sind.

**22.** Anzeigesystem nach einem der vorhergehenden Ansprüche, wobei mindestens einer der Schmalbandabsorber ein Polymethinfarbstoff sind.

**23.** Anzeigesystem nach einem der vorhergehenden Ansprüche, wobei die Zwischenschicht PVB umfasst.

**24.** Anzeigesystem nach einem der vorhergehenden Ansprüche, wobei die Schmalbandabsorber sich in einem Film befinden, der zwischen den beiden PVB-Schichten in der Zwischenschicht positioniert ist.

**25.** Anzeigesystem nach einem der vorhergehenden Ansprüche, wobei der Überzug einen oder mehrere UV-Lichtblocker enthält.

**26.** Anzeigesystem nach einem der vorhergehenden Ansprüche, wobei die UV-Blocker UV-Farbstoffabsorber sind, die

eine Schicht ausbilden, die UV-Strahlung zu den Schmalbandfarbstoffen blockiert.

**27.** Anzeigesystem nach einem der vorhergehenden Ansprüche, wobei das Überzugsystem NIR-Absorber enthält.

## Revendications

**1.** Système d'affichage pour l'affichage d'informations, le système d'affichage comprenant :

a. un vitrage (102, 202) qui comporte un premier substrat rigide transparent, un second substrat rigide transparent et une couche intermédiaire positionnée entre le premier et le second substrat rigide transparent ;
b. un projecteur (100) qui émet de la lumière vers le vitrage à trois plages de longueurs d'onde distinctes dans le spectre visible ;
c. un ou plusieurs absorbeurs à bande étroite, disposés dans une zone de vision du vitrage, qui absorbent sélectivement la lumière dans au moins l'une des trois plages de longueurs d'onde distinctes ; et
d. un ou plusieurs réflecteurs à bande étroite, disposés dans la zone de vision du vitrage, qui réfléchissent sélectivement la lumière dans au moins l'une des trois plages de longueurs d'onde distinctes, **caractérisés en ce que**

au moins l'un des réflecteurs à bande étroite présente à la fois une réflexion secondaire étroite dans le domaine visible qui réfléchit sélectivement la lumière dans au moins l'une des trois plages de longueurs d'onde émises par le projecteur, et une réflexion primaire dans le domaine proche infrarouge, dans la même construction multicouche.

**2.** Système d'affichage selon la revendication 1, dans lequel les un ou plusieurs réflecteurs à bande étroite comprennent un empilement multicouche diélectrique.

**3.** Système d'affichage selon l'une quelconque des revendications précédentes, dans lequel l'empilement multicouche diélectrique comprend des matériaux à indice élevé et faible alternés qui produisent un pic principal dans le domaine NIR et un pic secondaire étroit dans le domaine visible.

**4.** Système d'affichage selon l'une quelconque des revendications précédentes, dans lequel les matériaux à indice élevé et faible alternés sont des polymères.

**5.** Système d'affichage selon l'une quelconque des revendications précédentes, dans lequel les matériaux à indice élevé et faible alternés sont des oxydes métalliques.

**6.** Système d'affichage selon l'une quelconque des revendications précédentes, dans lequel les un ou plusieurs réflecteurs à bande étroite réfléchissent dans le domaine bleu de la lumière visible.

**7.** Système d'affichage selon l'une quelconque des revendications précédentes, dans lequel les un ou plusieurs réflecteurs à bande étroite réfléchissent dans le domaine vert de la lumière visible.

**8.** Système d'affichage selon l'une quelconque des revendications précédentes, dans lequel les un ou plusieurs réflecteurs à bande étroite comprennent deux réflecteurs qui réfléchissent respectivement dans le domaine bleu de la lumière visible et dans le domaine vert de la lumière visible.

**9.** Système d'affichage selon l'une quelconque des revendications précédentes, dans lequel les un ou plusieurs réflecteurs à bande étroite sont prévus dans la couche intermédiaire.

**10.** Système d'affichage selon l'une quelconque des revendications précédentes, dans lequel un ou plusieurs réflecteurs à bande étroite sont situés dans ou sur l'un des substrats rigides.

**11.** Système d'affichage selon l'une quelconque des revendications précédentes, dans lequel les un ou plusieurs réflecteurs à bande étroite se trouvent dans un revêtement ou un film fixé à l'un des deux substrats rigides.

**12.** Système d'affichage selon l'une quelconque des revendications précédentes, dans lequel les un ou plusieurs absorbeurs à bande étroite se trouvent dans la couche intermédiaire.

**13.** Système d'affichage selon l'une quelconque des revendications précédentes, dans lequel les un ou plusieurs absorbeurs à bande étroite se trouvent dans ou sur l'un des substrats rigides.

**14.** Système d'affichage selon l'une quelconque des revendications précédentes, dans lequel les un ou plusieurs absorbeurs à bande étroite se trouvent dans un revêtement ou un film fixé à l'un des deux substrats rigides.

**15.** Système d'affichage selon l'une quelconque des revendications précédentes, dans lequel la couche intermédiaire est munie d'une partie en forme de coin qui aligne des images primaires et secondaires réfléchies par le vitrage.

**16.** Système d'affichage selon l'une quelconque des revendications précédentes, dans lequel les trois plages de longueurs d'onde distinctes émises par le projecteur comportent une lumière de 445 nm, 515 nm et 642 nm.

**17.** Système d'affichage selon l'une quelconque des revendications précédentes, dans lequel les trois plages de longueurs d'onde distinctes émises par le projecteur comportent une lumière de 445 nm, 550 nm et 642 nm.

**18.** Système d'affichage selon l'une quelconque des revendications précédentes, dans lequel l'une des plages de longueurs d'onde distinctes émises par le projecteur comporte une lumière ayant une longueur d'onde sélectionnée parmi l'une ou plusieurs de 635, 638, 650 ou 660.

**19.** Système d'affichage selon l'une quelconque des revendications précédentes, dans lequel le projecteur est un projecteur à laser DPSS, et dans lequel les trois plages de longueurs d'onde distinctes émises par le projecteur comportent une lumière de 457 nm, 532 nm et 671 nm, et ont une FWHM d'environ 0,5 nm à environ 50 nm.

**20.** Système d'affichage selon l'une quelconque des revendications précédentes, dans lequel le projecteur est un projecteur à laser DPSS, et dans lequel les trois plages de longueurs d'onde distinctes comportent une lumière de 473 nm, 532 nm et 671 nm, et ont une FWHM d'environ 0,5 nm à environ 50 nm.

**21.** Système d'affichage selon l'une quelconque des revendications précédentes, dans lequel les absorbeurs à bande étroite sont sélectionnés parmi des colorants et des pigments.

**22.** Système d'affichage selon l'une quelconque des revendications précédentes, dans lequel au moins l'un des absorbeurs à bande étroite est un colorant polyméthine.

**23.** Système d'affichage selon l'une quelconque des revendications précédentes, dans lequel la couche intermédiaire comprend du PVB.

**24.** Système d'affichage selon l'une quelconque des revendications précédentes, dans lequel les absorbeurs à bande étroite se trouvent dans un film positionné entre deux couches de PVB dans la couche intermédiaire.

**25.** Système d'affichage selon l'une quelconque des revendications précédentes, dans lequel le vitrage incorpore un ou plusieurs bloqueurs de lumière UV.

**26.** Système d'affichage selon l'une quelconque des revendications précédentes, dans lequel les bloqueurs d'UV sont des absorbeurs de colorants UV formant une couche bloquant les rayonnements UV vers les colorants à bande étroite.

**27.** Système d'affichage selon l'une quelconque des revendications précédentes, dans lequel le système de vitrage incorpore des absorbeurs NIR.

Fig. 1

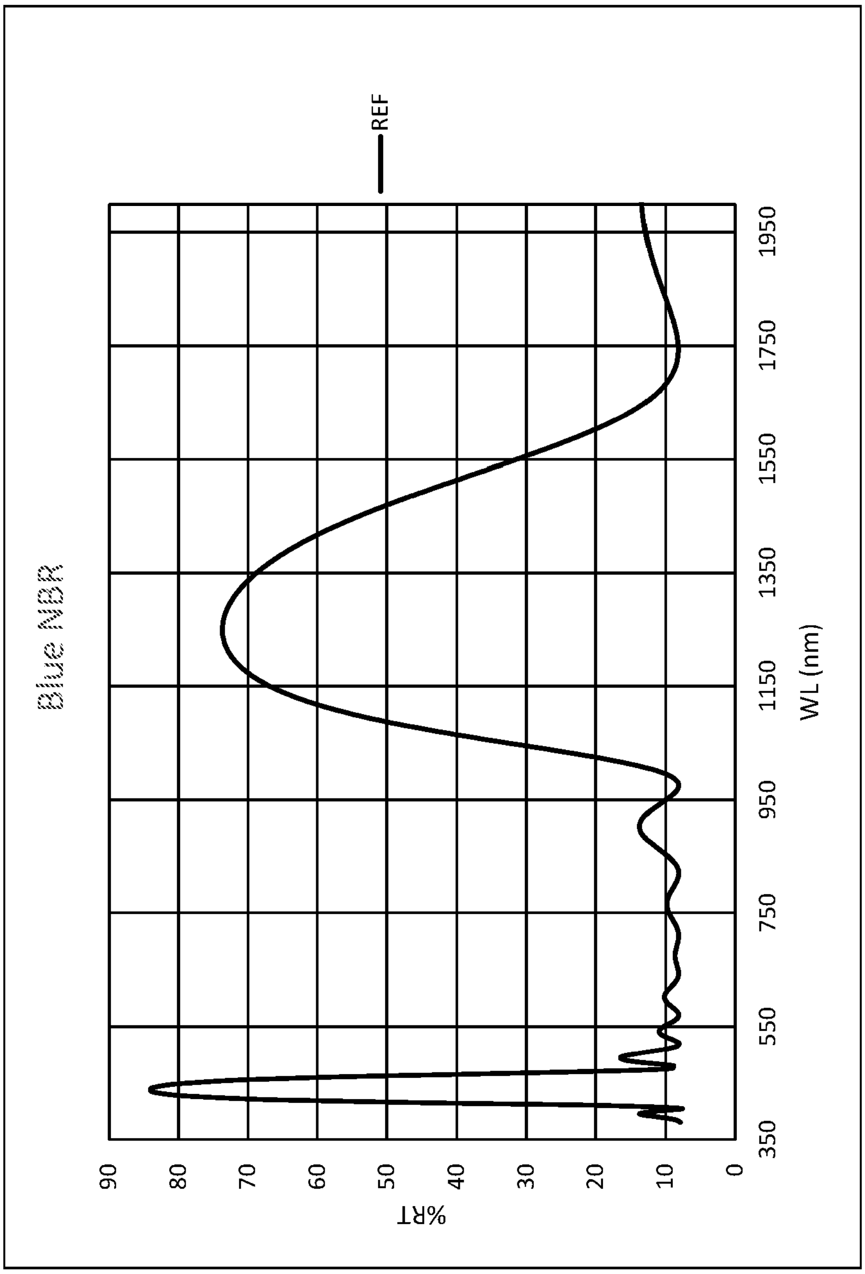
Blue NBR
%RT
90
80
70
60
50
40
30
20
10
0
350
550
750
950
1150
1350
1550
1750
1950
WL (nm)
REF

Fig. 2

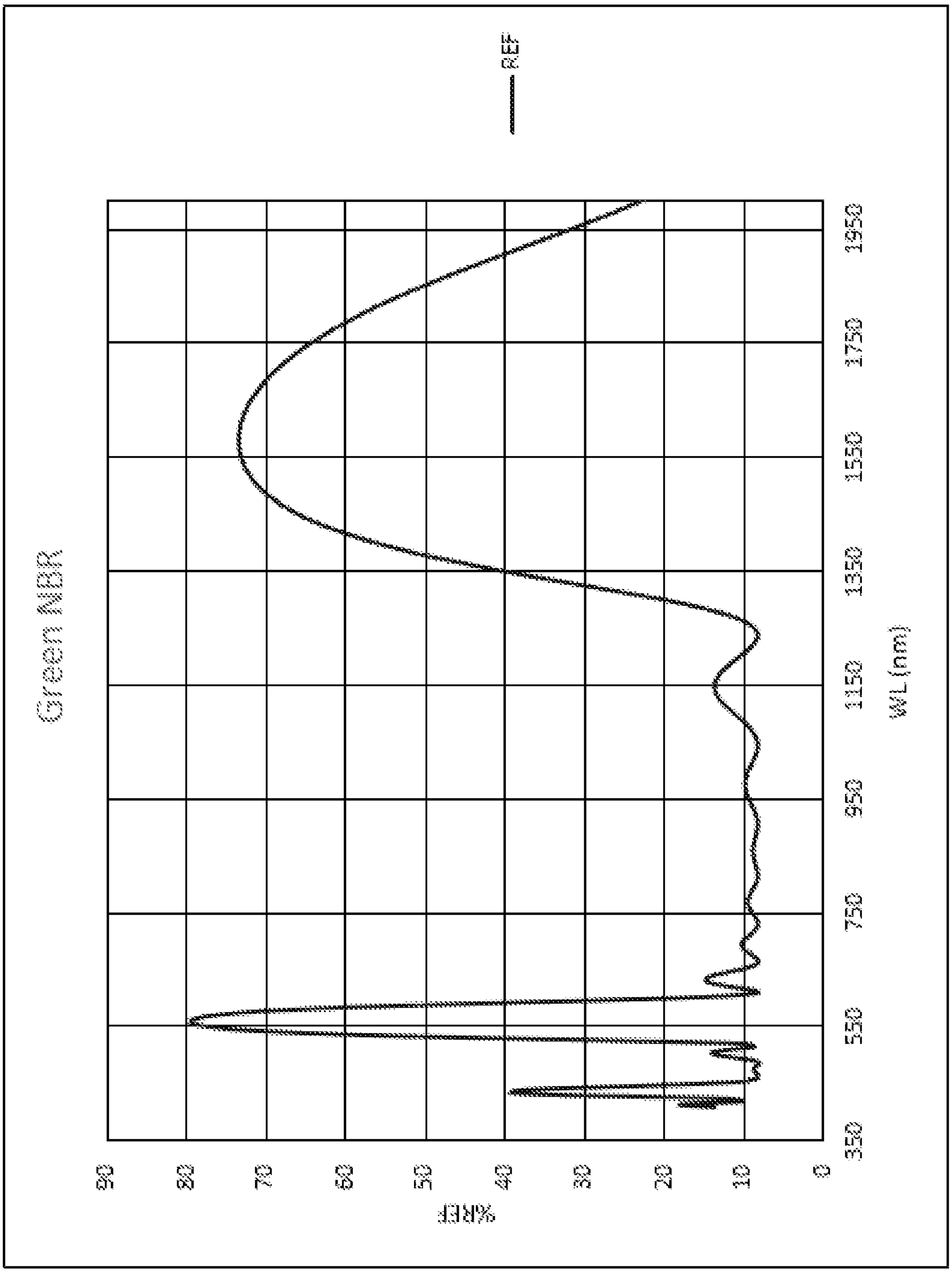
Green NBR
REF
%REF
90
80
70
60
50
40
30
20
10
0
350
550
750
950
1150
1350
1550
1750
1950
WL (nm)

Fig. 3

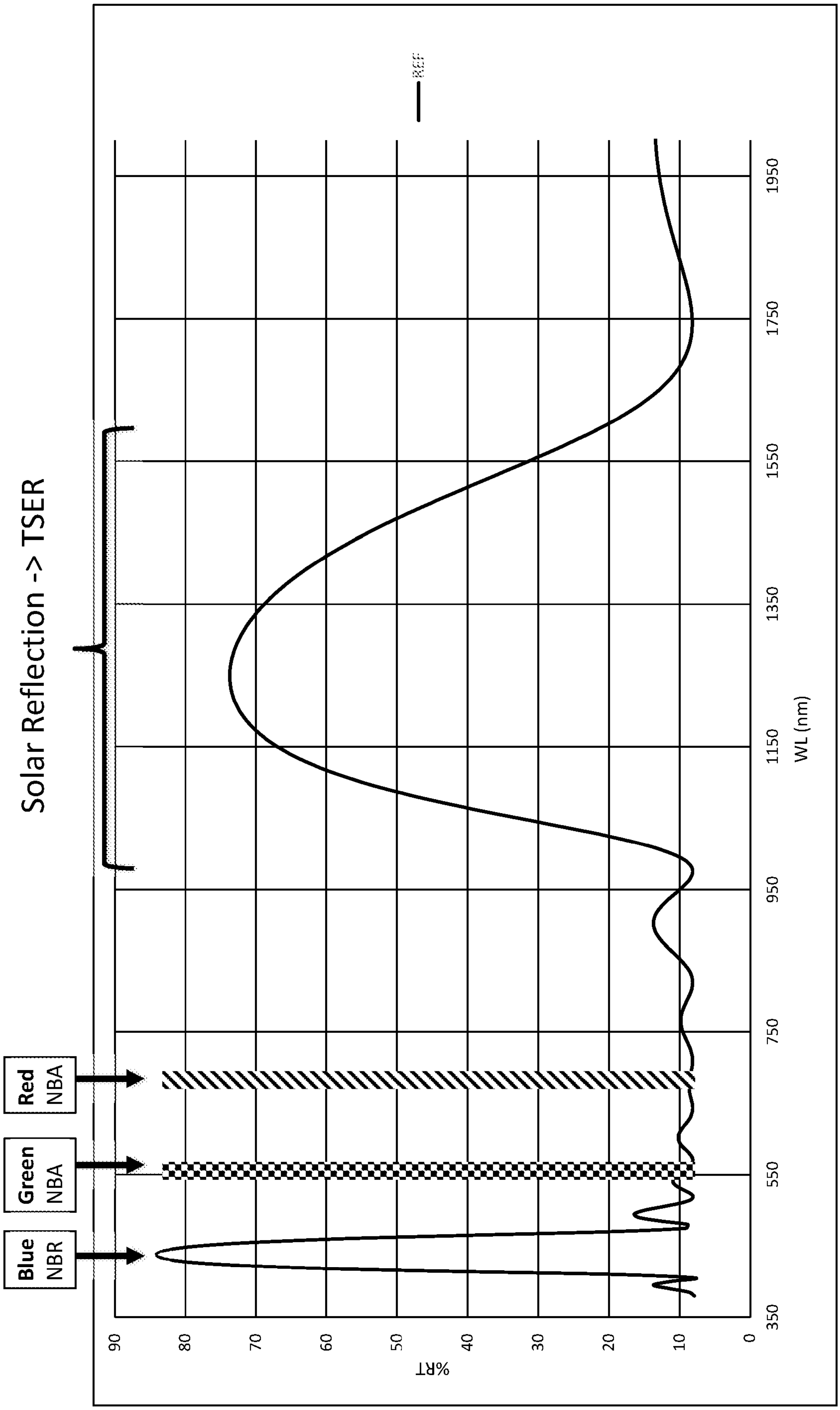
Solar Reflection -> TSER
Blue NBR
Green NBA
Red NBA
%RT
0
10
20
30
40
50
60
70
80
90
350
550
750
950
1150
1350
1550
1750
1950
WL (nm)
REF

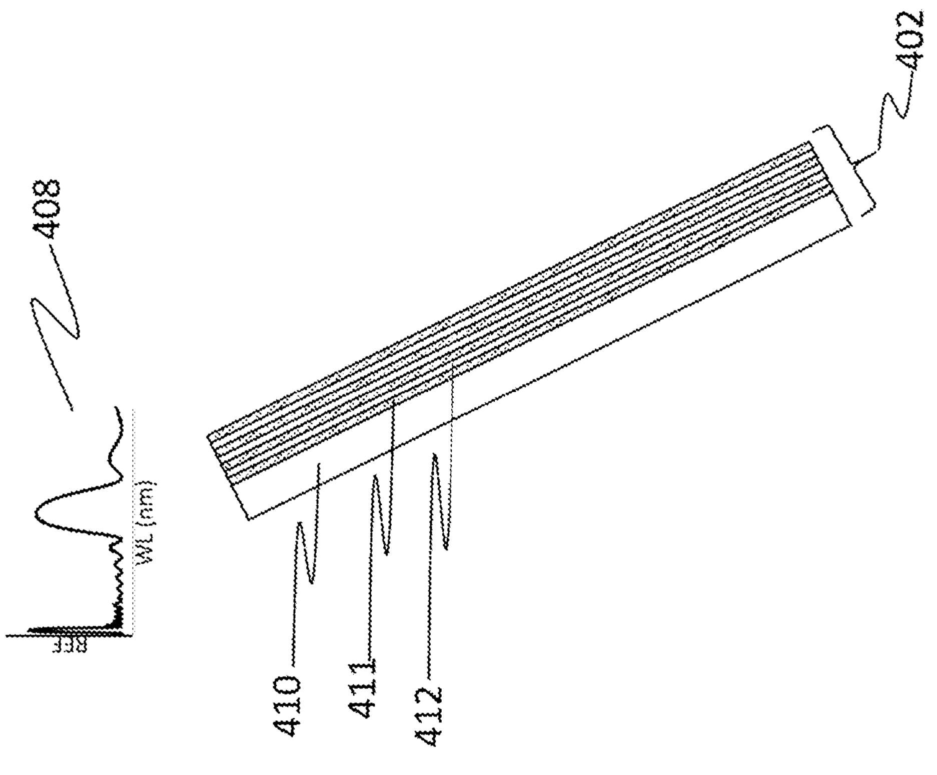


Fig. 4 Multilayer Stack

Fig. 5

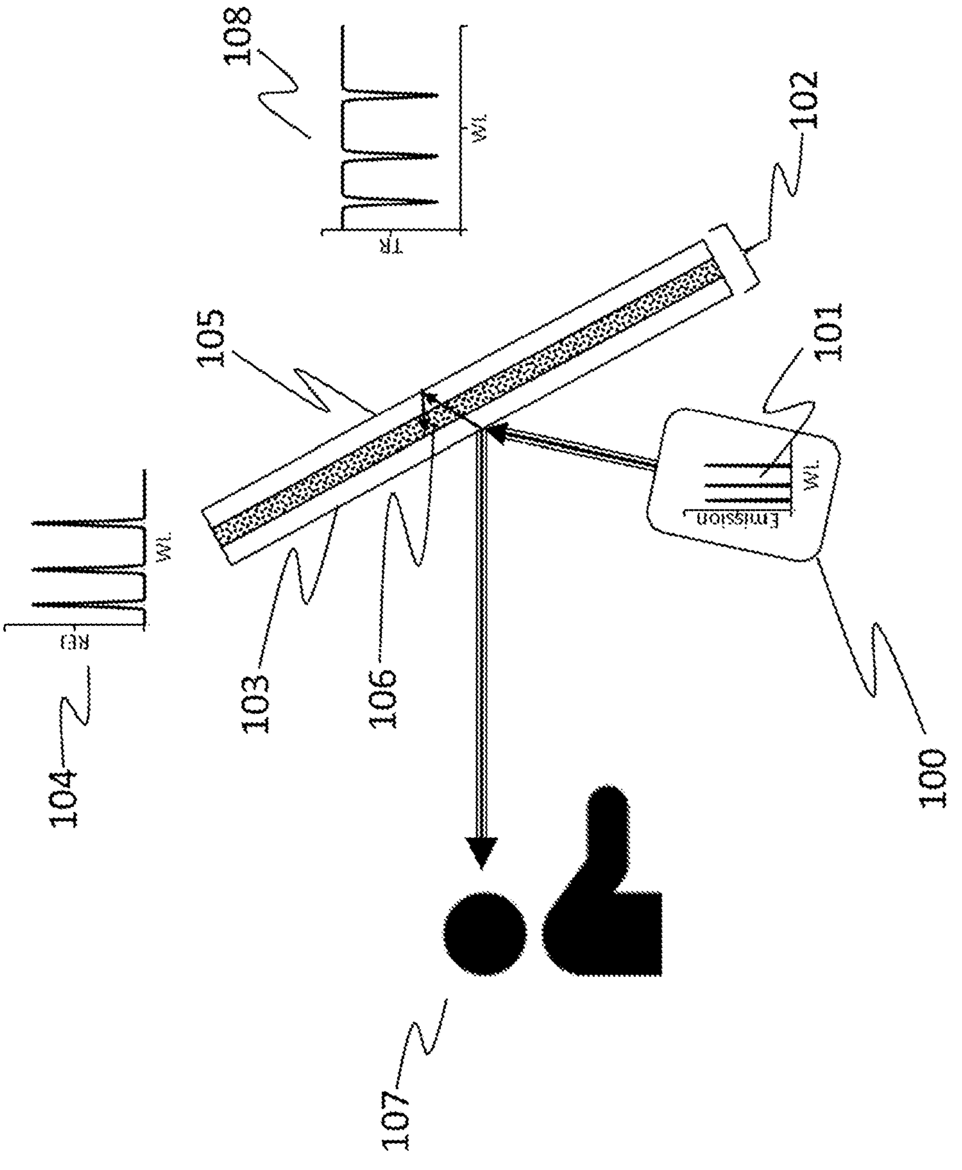

FIG 6

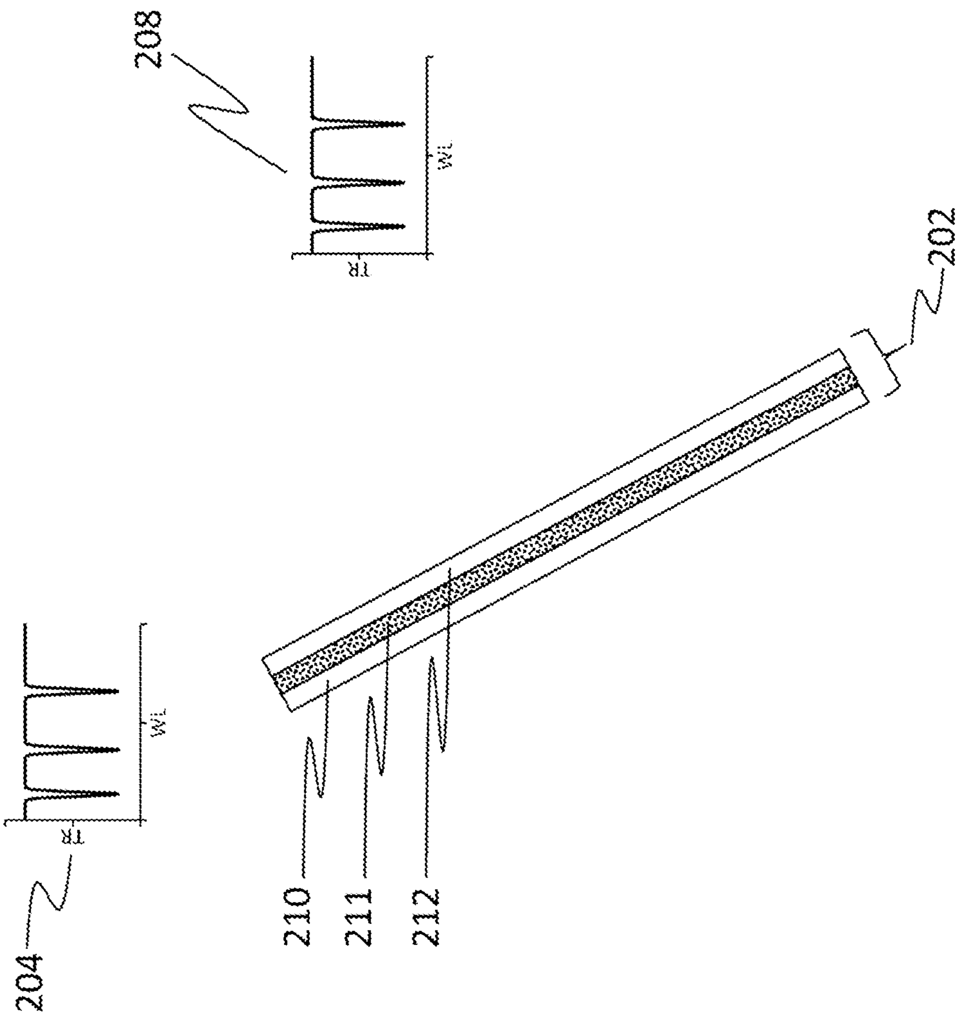

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- US 7777960 B
- EP 2045647 A1
- US 20180031749 A
- US 20180186125 A
- US 5005009 A
- WO 2020068513 A1
- US 7656585 B1
- EP 3667396 A1
- GB 2579370 A
- US 2012019923 A1
- US 6797396 B
- US 9975315 B2
- WO 8801230 A
- US 4799745 A
- US 4017661 A
- US 4786783 A
- JP 6674174 B
- JP 6417633 B
- WO 201004833 A
- JP 2007211226 B

### Non-patent literature cited in the description

- Pigments, Inorganic. **VÖLZ, HANS G. et al.** Ullmann's Encyclopedia of Industrial Chemistry. Weinheim: Wiley-VCH
- rtists' Colors. **MÜLLER, HUGO;** ; **MÜLLER, WOLFGANG** ; **WEHNER, MANFRED** ; **LIEWALD, HEIKE**. Ullmann's Encyclopedia of Industrial Chemistry.. Wiley-VCH.
- *CHEMICAL ABSTRACTS*, 42297-44-9
- *CHEMICAL ABSTRACTS*, 54079-53-7
- *CHEMICAL ABSTRACTS*, 201420-04-4
- *CHEMICAL ABSTRACTS*, 201557-75-5